(19) Europäisches Patentamt
European Patent Office
Office européen des brevets

(11) **EP 4 300 390 A1**

(12) **EUROPEAN PATENT APPLICATION**

(43) Date of publication:
**03.01.2024 Bulletin 2024/01**

(21) Application number: **23162886.8**

(22) Date of filing: **20.03.2023**

(51) International Patent Classification (IPC):
***G06Q 10/0631*** *(2023.01)*

(52) Cooperative Patent Classification (CPC):
**G06Q 10/06316**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.06.2022 JP 2022103368**

(71) Applicant: **FUJITSU LIMITED
Kawasaki-shi, Kanagawa 211-8588 (JP)**

(72) Inventors:
• **HOTTA, Shinji
Kawasaki-shi, Kanagawa, 211-8588 (JP)**
• **INOMATA, Akihiro
Kawasaki-shi, Kanagawa, 211-8588 (JP)**
• **KURAKI, Kensuke
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **METHOD FOR GENERATING WORKFLOW AND WORKFLOW GENERATING PROGRAM**

(57) A method for generating a workflow includes: generating multiple candidate workflows by making a modification to part of an existing workflow that defines multiple condition branches and following contents at respective destinations of the condition branches; obtaining KPI fluctuation vectors one for each candidate workflow from the existing workflow; generating multiple synthesized policies by synthesizing two or more of the KPI fluctuation vectors; calculating, when one of selected routes of multiple candidate workflows contains the modifications, a KPI predicted value of each synthesized policy by reflecting a weight parameter on the KPI fluctuation vector, the weight parameter being set such that a weight for a modification to an upper point of the selected route is higher than that to a lower point of the selected route among the modifications; and outputting a workflow of one of the synthesized policies the KPI predicted value of which satisfies a target value.

FIG.30

**Description**

[Technical Field]

The embodiment discussed herein relates to a method for generating a workflow and a workflow generating program.

[Background Technique]

In the practice of policy planning, policy plans are prepared based on consideration, experience, and assumptions, which makes it difficult to achieve the policy index (Key Performance Indicator: KPI) target. For the above, demands have been arisen for generating an achievable policy based on evidence-based KPI prediction at a policy planning stage and presenting the generated policy to a policy developer in advance.

Conventionally, in regard of a policy candidate, for example, a technique has been proposed which predicts a KPI of a policy from integrated data including various types of data and supports decision-making in policy planning.

For example, as integrated data, a history of daily health-information, a history of diagnosis results, a history of lifestyle habits, and a history of examination results for each individual local resident are prepared in advance.

Then, as policy KPI prediction, "when a policy candidate is executed, the probability of becoming obese within a predetermined period is predicted (at three levels of high, medium, and low)" for individuals in the target regional area.

In setting a policy candidate, for example, a policy goal of "reducing the prevalence of obesity in adults in the target regional area to 25 %", a policy candidate of "implementing exercise and nutritional guidance by physicians for young people living in the regional area", and a KPI of "prevalence of obesity in adults in the regional area" are set.

[Related Art Reference]

[Patent Document]

[Patent Document 1] Japanese Laid-open Patent Publication No. 2022-14106
[Patent Document 2] Japanese Laid-open Patent Publication No. 2005-332270
[Patent Document 3] Japanese Laid-open Patent Publication No.2017-208035
[Patent Document 4] Japanese Laid-open Patent Publication No.2021-72022
[Patent Document 5] Japanese Patent No. 6799313

[Non-Patent Document]

[Non-Patent Document 1] Konstantinos Moutselos; Dimosthenis Kyriazis; Ilias Maglogiannis, "A web based modular environment for assisting health policy making utilizing big data analytics", [online], July 23-25, IEEE, [Retrieved on June 15, 2022], Internet <URL: https://ieeexplore.ieee.org/document/8633625>

[Summary of Invention]

[Problem to be Solved by Invention]

However, in such a conventional method for aiding decision-making on policy planning, it is difficult to generate a new policy when a KPI of a policy is predicted and it is determined that the policy is unable to reach the goal. For example, when the predicted result of KPI "prevalence of obesity in adults" is 30% in the original policy candidate, the policy developer needs to reconsider a policy candidate in person because the predicted result does not reach KPI target of 25%, which makes the development complicated.

Therefore, a method of regenerating a new policy in case where the original policy does not reach the goal is also known. For example, a synthesized policy is generated by combining multiple policy candidates, and such synthesized policies are listed as many as conceivable. For example, if N policy candidates are present, N-th power of two synthesized policies are generated. Then, KPI prediction is sequentially performed on each of the synthesized policies, and when a policy candidate that can reach the goal is found, the policy candidate is adopted.

However, in this method, an increase in policy candidates exponentially increases combinations of synthesized policies. Therefore, since KPI prediction of all synthesized policy is simulated, the computational load is increased.

In particular, when many parameters that can be varied in the policy are present, combination of synthesized policy becomes enormous and the computational load for simulating KPI prediction increases to an unrealistic level.

As one aspect, one of the present invention is to generate a workflow that achieves a higher KPI on the basis of an existing workflow.

[Means to Solve the Problem]

According to an aspect of the embodiments, a computer-implemented method for generating a workflow includes: generating a plurality of candidate workflows by making a modification to part of an existing workflow, the existing workflow defining a plurality of condition branches and following contents at respective destinations of the plurality of condition branches; obtaining a plurality of KPI (Key Performance Indicator) fluctuation vectors one for each of the plurality of candidate workflows from the existing workflow; generating a plurality of synthesized policies by synthesizing two or more of the plurality of KPI fluctuation vectors; calculating, when one of selected routes of the plurality of candidate workflows contains a plurality of the modifications, a KPI predicted value of each of the plurality of synthesized policies by reflecting a weight parameter on the KPI fluctuation vector, the weight parameter being set such that a weight for a modification to an upper point of the selected route among the plurality of modifications is higher than a weight for a modification to a lower point of the selected route among the plurality of modifications; and outputting a workflow of one of the plurality of synthesized policies the KPI predicted value of which satisfies a target value.

[Effect of Invention]

According to an embodiment, a workflow that achieves a higher KPI based on an existing workflow can be generated.

[Brief Description of Drawings]

FIG. 1 is a diagram illustrating a method for predicting a KPI of a synthesized policy according to a related art;
FIG. 2 is a diagram is a diagram illustrating a CKD (Chronic Kidney Disease) following framework in a specific checkup in the form of a workflow;
FIG. 3 is a diagram illustrating a method for generating a synthesized policy using KPI prediction of FIG. 1;
FIG. 4 is a diagram illustrating an example of a result of node allocation and a result of KPI provisional prediction with respect to the method for generating a synthesized policy of FIG. 3;
FIG. 5 is a diagram illustrating an example of a result of node allocation and a result of KPI provisional prediction when the influence ranges of perturbations overlap in a method for generating a synthesized policy using KPI prediction;
FIG. 6 is a block diagram illustrating an example of a hardware (HW) configuration of a computer that achieves the functions of a workflow generating apparatus according to an example of one embodiment;
FIG. 7 is a diagram illustrating an example of a functional configuration of the workflow generating apparatus of the one embodiment;
FIG. 8 is a diagram illustrating a policy workflow in the workflow generating apparatus of the one embodiment;
FIG. 9 is a diagram illustrating an example of a method for adding a perturbation in the workflow generating apparatus of the one embodiment;
FIG. 10 is a diagram illustrating an example of a method for generating a policy candidate in a policy candidate generating unit of the workflow generating apparatus of the one embodiment;
FIG. 11 is a diagram illustrating an example of multiple policy candidates generated by the policy candidate generating unit of the workflow generating apparatus of the one embodiment;
FIG. 12 is a diagram illustrating a process performed by a policy candidate KPI predicting unit of the workflow generating apparatus of the one embodiment;
FIG. 13 is a diagram illustrating an example of a state of each individual and a result of allocating an intervening node for each policy candidate in the workflow generating apparatus of an example of the one embodiment;
FIG. 14 is a diagram illustrating a result of predicting a KPI of each individual for each policy candidate in the workflow generating apparatus of an example of the one embodiment;
FIG. 15 is a diagram illustrating a method for calculating a KPI predicted value by the policy candidate KPI predicting unit of the workflow generating apparatus of an example of the one embodiment;
FIG. 16 is a diagram illustrating an example of an ultimate KPI predicted value predicted by the policy candidate KPI predicting unit of the workflow generating apparatus of an example of the one embodiment;
FIG. 17 is a diagram illustrating a method for generating a fluctuation vector by the policy candidate KPI predicting unit of the workflow generating apparatus of an example of the one embodiment;

FIG. 18 is a diagram illustrating an example of a fluctuation vector generated by the policy candidate KPI predicting unit of the workflow generating apparatus of an example of the one embodiment;

FIG. 19 is a diagram illustrating an example of a functional configuration a synthesized policy provisional KPI predicting unit of the workflow generating apparatus of an example of the one embodiment;

FIG. 20 is a diagram illustrating a process performed by the synthesized policy provisional KPI predicting unit of the workflow generating apparatus of an example of the one embodiment;

FIG. 21 is a diagram illustrating an example of combination patterns of weights applied to perturbations in the workflow generating apparatus of an example of the one embodiment;

FIG. 22 is a diagram illustrating a process performed by a weight adjusting parameter calculating unit of the workflow generating apparatus of an example of the one embodiment;

FIG. 23 is a diagram illustrating a flow depth of a policy workflow in the workflow generating apparatus of an example of the one embodiment;

FIG. 24 is a diagram illustrating examples of a weight pattern and an adjusting parameter of the workflow generating apparatus of an example of the one embodiment;

FIG. 25 is a diagram illustrating a synthesized policy after weight adjustment with a weight adjusting parameter in the workflow generating apparatus of an example of the one embodiment;

FIG. 26 is a diagram illustrating a process performed by a combination determining unit of the workflow generating apparatus of an example of the one embodiment;

FIG. 27 is a diagram illustrating an example of a KPI target in the workflow generating apparatus of an example of the one embodiment;

FIG. 28 is a diagram illustrating a process performed by a synthesized policy actual KPI predicting unit of the workflow generating apparatus of an example of the one embodiment;

FIG. 29 is a diagram illustrating an example of outputted information generated by an output controlling unit of the workflow generating apparatus of an example of the one embodiment;

FIG. 30 is a flow diagram illustrating an overview of a process performed in the workflow generating apparatus of an example of the one embodiment; and

FIG. 31 is a flow diagram illustrating a detailed process performed by the workflow generating apparatus of an example of the one embodiment.

[Description of Embodiment(S)]

(I) Related Technique:

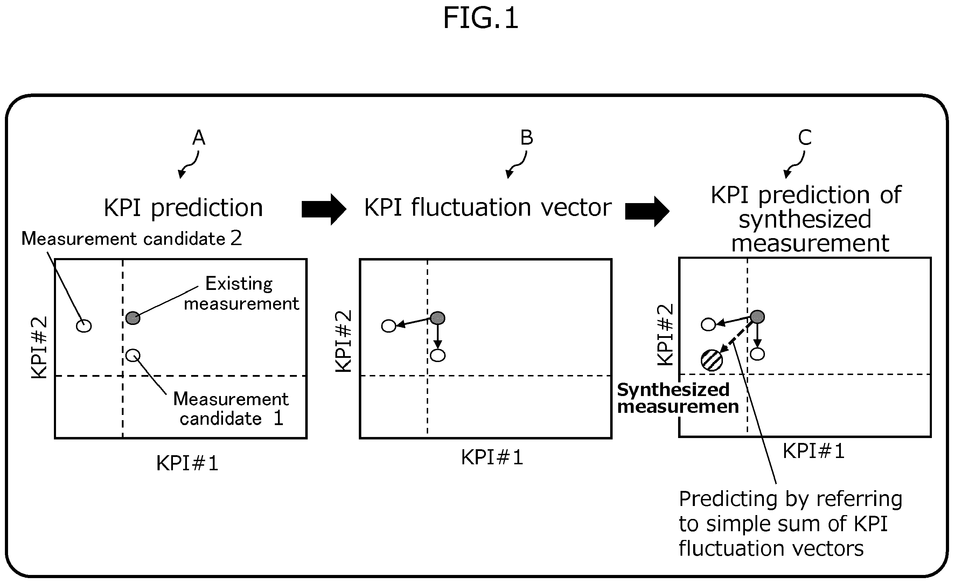

The following method can be conceived as a method of performing KPI prediction of synthesized policy described above. FIG. 1 is a diagram illustrating a method for predicting a KPI of a synthesized policy according to a related art.

First, KPI prediction is performed on an existing policy (one piece) and policy candidates (N pieces at the maximum) serving as sources of synthesis. In FIG. 1, the reference symbol A is a diagram illustrating a result of KPI prediction, and results of KPI of one existing policy and two policy candidates (policy candidates 1 are 2) are plotted in a coordinate space having a vertical axis and a horizontal axis defined by the KPI #1 and the KPI #2, respectively.

Next, a vector (referred to as a KPI fluctuation vector) indicating a difference between a KPI predicted value of the existing policy and a KPI predicted value of each policy candidate is obtained.

In FIG. 1, the reference symbol B illustrates respective KPI fluctuation vectors indicating the differences between the policy candidates 1 and 2 and the existing policy indicated by reference symbol A.

A value obtained by simply adding respective KPI fluctuation vectors of the policy candidates to the KPI predicted value of the existing policy is regarded as a predicted value of the synthesized policy.

In FIG. 1, the reference symbol C denotes a synthesized policy generated (predicted) by adding KPI fluctuation vectors of the respective policy candidates indicated by the reference symbol B.

Here, the policy may be represented in the form of a workflow in which multiple condition distributions and multiple nodes are combined. In addition, a workflow representing a policy may be referred to as a policy workflow. A policy workflow may include an element except for a condition branch and a node.

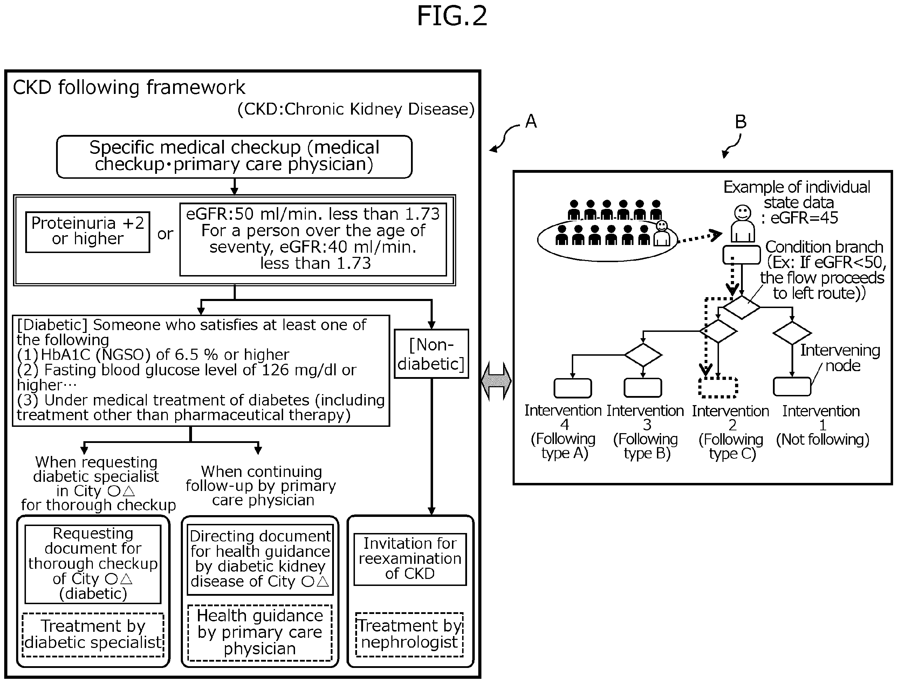

FIG. 2 is a diagram illustrating a CKD (Chronic Kidney Disease) following framework in a specific checkup in the form of a workflow.

In FIG. 2, the reference symbol A illustrates a CKD following framework in a specific medical checkup, and the reference symbol B illustrates a workflow of the following framework illustrated in the reference symbol A.

In the specific medical checkup (specified checkup), for example, the respective determination branches for results of tests such as "whether the eGFR test value is less than a predetermined threshold (for example, 50ml/min/1.73m$^2$)" and "whether the urinary protein is 2+ or more" correspond to condition branches in the workflow.

In addition, the "treatment by a nephrologist", "health guidance by a primary care physician", and "treatment by a diabetic specialist" specified as the results of the respective determination branches correspond to the nodes in the workflow. In these nodes, the nodes may be referred to as intervening nodes because they are accompanied by intervention by any of a nephrologist, a primary care physician, and a diabetic specialist.

In the policy workflow, multiple condition branch are sequentially traced based on individual state data of the individual of a target to the policy, and nodes allocated to the individual are determined. A node corresponds to a following content reached at a branch destination in a workflow.

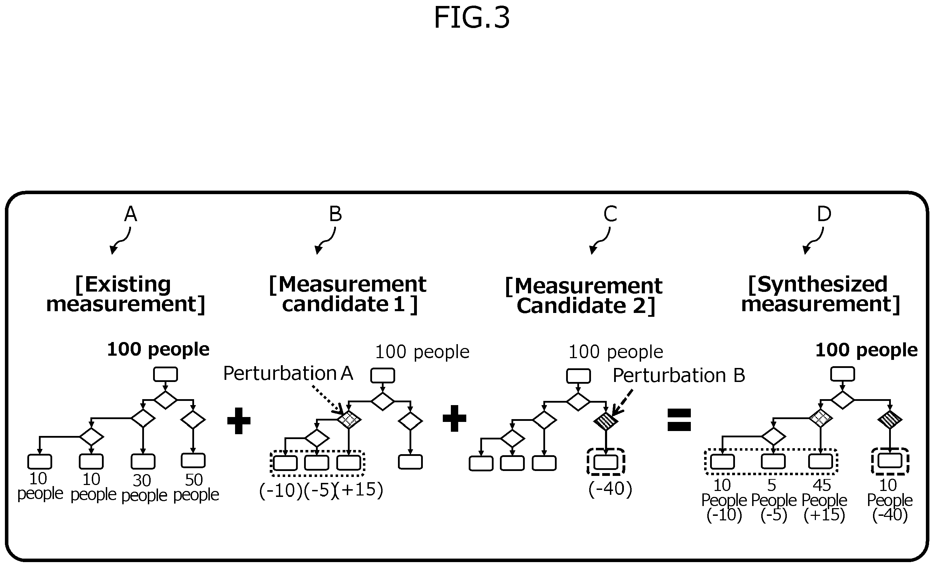

FIG. 3 is a diagram illustrating a method for generating a synthesized policy using KPI prediction of FIG. 1.

In FIG. 3, the reference symbol A represents an existing policy. The reference symbol B represents a policy candidate 1, the reference symbol C represents a policy candidate 2, and the reference symbol D represents a synthesized policy.

The policy candidate 1 indicated by the reference symbol B is obtained by adding a perturbation A to the existing policy, and the policy candidate 2 indicated by the reference symbol C is obtained by adding a perturbation B to existing policy. The synthesized policy indicated by the reference symbol D is a combination of the policy candidate 1 and the policy candidate 2.

A perturbation is a predetermined change given to the policy workflow within a predetermined range. A perturbation may be given to the element (e.g., a condition branch, or a node) that constitute a policy workflow. The predetermined change may be, for example, an increase in the criterion parameters of a condition.

As a premise, in order to perform KPI prediction using a policy workflow, a workflow is applied to all the policy target persons, the number of persons to be allocated to each node is calculated, and KPI prediction is performed on the basis of results of allocation to the respective nodes. For example, KPI of the prevalence of obesity morbidity is increased if the number of persons allocated to the obesity guidance is small.

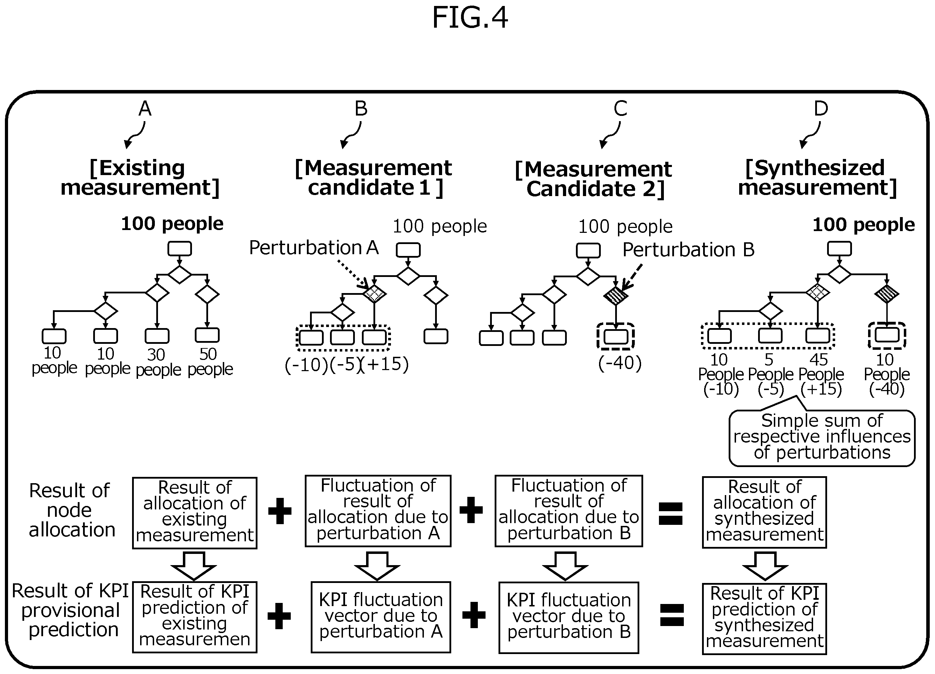

FIG. 4 is a diagram illustrating an example of a result of node allocation and a result of KPI provisional prediction with respect to the method for generating a synthesized policy of FIG. 3.

On the basis of the premise described above, as illustrated in FIG. 4, the result of node allocation of the policy candidate 1 and the result of node allocation of the policy candidate 2 are obtained.

In the reference symbol B of FIG. 4, a change (fluctuation of a result of allocation) in the number of persons allocated to a node by the perturbation A is indicated by a number with parentheses. Similarly, in the reference symbol C of FIG. 4, a change (fluctuation of a result of allocation) in the number of persons allocated to a node by the perturbation B is indicated by a number with parentheses.

In the embodiment illustrated in FIG. 4, a result of node allocation of the synthesized policy can be obtained by adding the result of node allocation of the existing policy, the difference between the result of node allocation of the existing policy and a result of node allocation of the policy candidate 1 and the difference between the result of node allocation of the existing policy and a result of node allocation of the policy candidate 2.

Therefore, it is reasonable to determine a KPI predicted value of the synthesized policy by adding a KPI predicted value of the existing policy and KPI fluctuation vectors of the policy candidates 1 and 2.

However, if the influence ranges of the respective perturbation overlap, the influence of an upper perturbation largely affects but the influence of a lower perturbation less affects, so that this method does not correctly function.

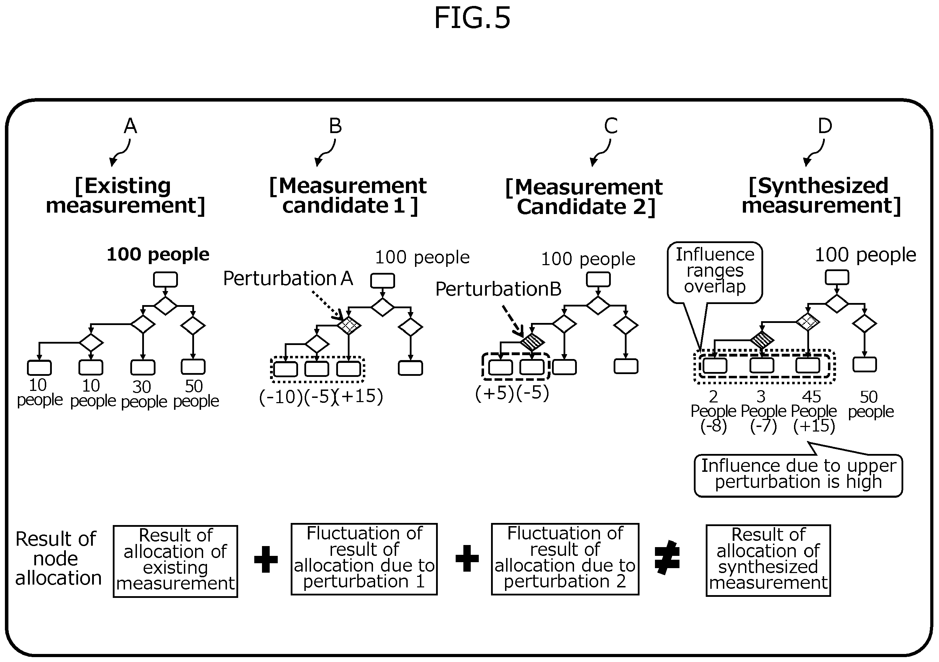

FIG. 5 is a diagram illustrating an example of a result of allocating nodes and a result KPI provisional prediction when the influence ranges of perturbations overlap in a method for generating a synthesized policy using KPI prediction.

In the example illustrated in FIG. 5, the perturbation B of the policy candidate 2 is included in the influence range of the perturbation A of the policy candidate 1, which means that the influence range of the perturbation A of the policy candidate 1 overlaps the influence range of the perturbation B of the policy candidate 2. If the influence ranges overlap, the same policy target person may pass both influence ranges.

The upstream side of the workflow is called upper, and the downstream side is called lower. In the embodiment illustrated in FIG. 5, the perturbation A of the policy candidate 1 corresponds to an upper point and the perturbation B of the policy candidate 2 corresponds to a lower point.

Since, when the policy candidate 1 and the policy candidate 2 are synthesized, the policy candidate 1 on the upper point is dominant, the result of node allocation of the synthesized policy is not a simple sum of the respective difference of the results of node allocation of the respective policy candidates 1 and 2.

Therefore, the KPI predicted value of the synthesized policy is not a simple sum, and KPI prediction may be erroneously estimated even if the KPI predicted value of the existing policy and KPI fluctuation vectors of the policy candidate 1 and 2 are added.

Therefore, in an information processing apparatus 1 serving as an example of the present embodiment, when policy candidates to be synthesized are synthesized and the influence ranges of perturbations overlap, a more precise KPI can be predicted by considering the influence on a lower perturbation (at a lower point) from an upper perturbation (at an upper point).

(II) one embodiment:

Hereinafter, one embodiment of the present method and program for generating a workflow will now be described with reference to the accompanying drawings. However, the following embodiment is merely illustrative and is not intended to exclude the application of various modifications and techniques not explicitly described in the embodiment. Namely, the present embodiment can be variously modified and implemented without departing from the scope thereof. Further, each of the drawings can include additional functions not illustrated therein to the elements illustrated in the drawing.

The workflow generating apparatus 1 generates a workflow that can achieve a higher KPI on the basis of a workflow of an existing policy (existing policy workflow).

(A) Example of Hardware Configuration

The workflow generating apparatus 1 according to the one embodiment may be a virtual server (VM; Virtual Machine) or a physical server. The function of the workflow generating apparatus 1 may be achieved by one computer or by two or more computers. Further, at least some of the functions of the workflow generating apparatus 1 may be implemented using Hardware (HW) resources and Network (NW) resources provided by cloud environment.

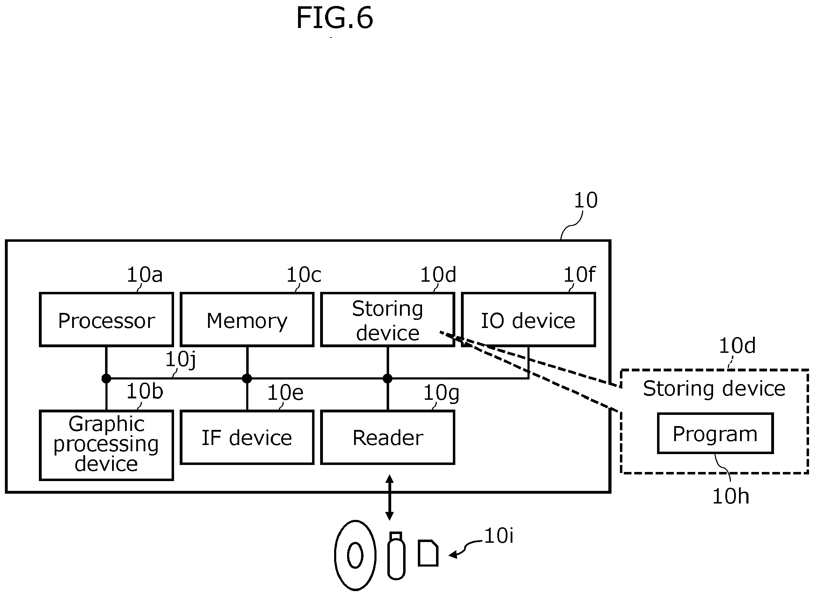

FIG. 6 is a diagram illustrating an example of a hardware (HW) configuration of a computer 10 that achieves the functions of the workflow generating apparatus 1 according to an example of one embodiment. If multiple computers are used as the HW resources for achieving the functions of the workflow generating apparatus 1, each of the computers may include the HW configuration illustrated in FIG. 6.

As illustrated in FIG. 6, the computer 10 may illustratively include a HW configuration formed of a processor 10a, a graphic processing device 10b, a memory 10c, a storing device 10d, an I/F (Interface) device 10e, an IO (Input/Output) device 10f, and a reader 10g.

The processor 10a is an example of an arithmetic operation processing device that performs various controls and calculations. The processor 10a may be communicably connected to the blocks in the computer 10 via a bus 10j. The processor 10a may be a multiprocessor including multiple processors, may be a multicore processor having multiple processor cores, or may have a configuration having multiple multicore processors.

The processor 10a may be any one of integrated circuits (ICs) such as Central Processing Units (CPUs), Micro Processing Units (MPUs), Accelerated Processing Units (APUs), Digital Signal Processors (DSPs), Application Specific ICs (ASICs) and Field Programmable Gate Arrays (FPGAs), or combinations of two or more of these ICs.

The graphic processing device 10b executes a screen displaying control on an outputting device such as a monitor included in IO device 10f. Example of the graphic processing device 10b are various type of arithmetic operation processing apparatus, and include ICs such as Graphics Processing Units (GPUs, APUs, DSPs, ASICs, and FPGAs.

The memory 10c is an example of a HW device that stores information such as various types of data and programs. Examples of the memory 10c include one or both of a volatile memory such as a Dynamic Random Access Memory (DRAM) and a non-volatile memory such as a Persistent Memory (PM).

The storing device 10d is an example of a HW device that stores information such as various types of data and programs. Examples of the storing device 10d include a magnetic disk device such as a Hard Disk Drive (HDD), a semiconductor drive device such as a Solid State Drive (SSD), and various storing devices such as a non-volatile memory. Examples of the non-volatile memory include a flash memory, a Storage Class Memory (SCM), and a Read Only Memory (ROM).

The storing device 10d may store a program 10h (workflow generating program) that implements all or part of various functions of the computer 10.

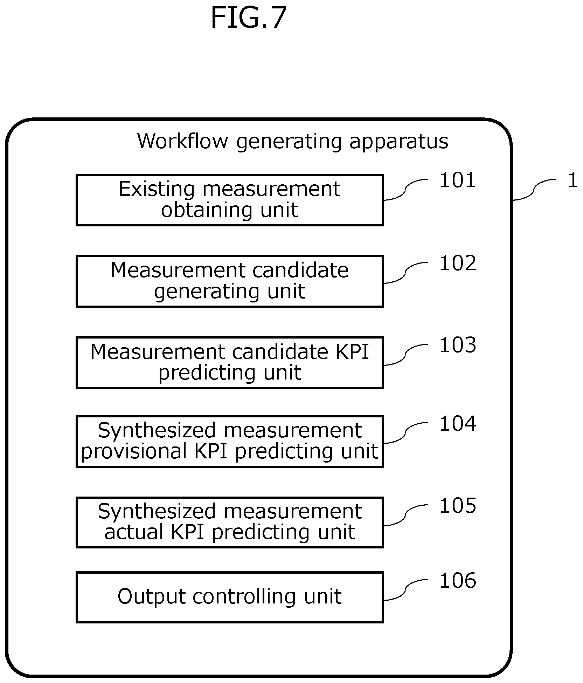

For example, the processor 10a of the workflow generating apparatus 1 can achieve the functions of generating a workflow to be detailed below by expanding the program 10h stored in the storing device 10d onto the memory 10c and executing the expanded program 10h. In the storing device 10d, various data pieces generated in the course of processing performed by each element (see FIG. 7) that achieves the function as the workflow generating apparatus 1 may be stored.

The I/F device 10e is an example of a communication IF that controls connection and communication between the present computer 10 and another computer. For example, the I/F device 10e may include an applying adapter conforming to Local Area Network (LAN) such as Ethernet (registered trademark) or optical communication such as Fibre Channel (FC). The applying adapter may be compatible with one of or both wireless and wired communication schemes.

For example, the workflow generating apparatus 1 may be communicably connected, through the IF device 10e and a network, to another non-illustrated information processing apparatus. Furthermore, the program 10h may be downloaded from the network to the computer 10 through the communication IF and be stored in the storing device 10d, for example.

The IO device 10f may include one or both of an input device and an output device. Examples of the input device include a keyboard, a mouse, and a touch panel. Examples of the output device include a monitor, a projector, and a printer. The IO device 10f may include, for example, a touch panel that integrates an input device and an output device. The output device may be connected to the graphic processing device 10b.

The reader 10g is an example of a reader that reads data and programs recorded on a recording medium 10i. The reader 10g may include a connecting terminal or device to which the recording medium 10i can be connected or inserted. Examples of the reader 10g include an applying adapter conforming to, for example, Universal Serial Bus (USB), a drive apparatus that accesses a recording disk, and a card reader that accesses a flash memory such as an SD card. The program 10h may be stored in the recording medium 10i. The reader 10g may read the program 10h from the recording medium 10i and store the read program 10h into the storing device 10d.

The recording medium 10i is an example of a non-transitory computer-readable recording medium such as a magnetic/optical disk, and a flash memory. Examples of the magnetic/optical disk include a flexible disk, a Compact Disc (CD), a Digital Versatile Disc (DVD), a Blu-ray disk, and a Holographic Versatile Disc (HVD). Examples of the flash memory include a semiconductor memory such as a USB memory and an SD card.

The HW configuration of the computer 10 described above is exemplary. Accordingly, the computer 10 may appropriately undergo increase or decrease of HW devices (e.g., addition or deletion of arbitrary blocks), division, integration in an arbitrary combination, and addition or deletion of the bus.

(B) Example of Functional Configuration:

FIG. 7 is a diagram illustrating an example of a functional configuration of the workflow generating apparatus 1 of the one embodiment.

As illustrated in FIG. 7, the workflow generating apparatus 1 may illustratively have functions as an existing policy obtaining unit 101, a policy candidate generating unit 102, a policy candidate KPI predicting unit 103, a synthesized policy provisional KPI predicting unit 104, a synthesized policy actual KPI predicting unit 105, and an output controlling unit 106. These functions may be implemented by the hardware of a computer 10 (see FIG. 6).

The existing policy obtaining unit 101 obtains an existing policy. The existing policy obtaining unit 101 may obtain an existing policy that has been generated in any known method and stored in a predetermined storing region of the storing device 10d in advance, for example, by reading the existing policy. Alternatively, the existing policy obtaining unit 101 may obtain an existing policy from another computer connected via the IF device 10e.

A policy is expressed in the form of a workflow having multiple condition branches and multiple nodes (intervening nodes). A workflow representing a policy may be referred to as a policy workflow or a policy flow. An existing policy is also represented by a policy workflow.

For each individual target of a policy, intervening nodes allocated to the individual are determined by sequentially tracing the policy workflow through multiple condition branches on the basis of the individual state data.

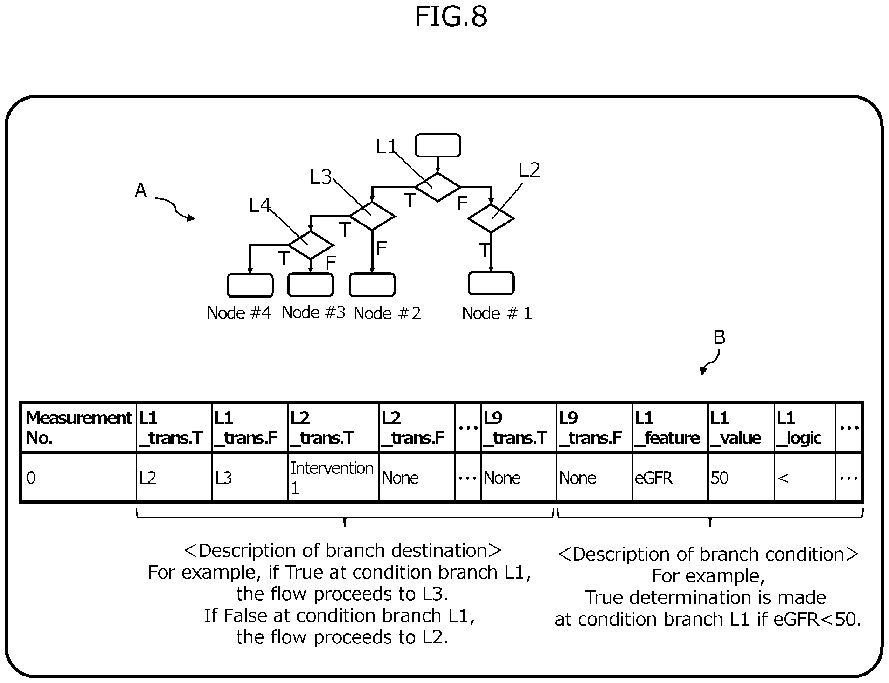

FIG. 8 is a diagram illustrating a policy workflow in the workflow generating apparatus 1 of the one embodiment.

In FIG. 8, a reference symbol A represents an example of an existing policy workflow. The existing policy workflow represented by the reference symbol A includes four condition branches L1 to L4 and four nodes (intervening nodes) #1 to #4.

The policy workflow has a tree structure, and the starting node side not having a parent (upper side in the drawing) may be referred to as the upstream side or upper side, and the terminal node side not having a child (lower side in the drawing) may be referred to as the downstream side or lower side.

In FIG. 8, the reference symbol B represents a flow definition table corresponding to the existing policy workflow indicated by the reference symbol A. The flow definition table is information representing the configuration of the policy workflow, and specifies information of all condition branches included in the policy workflow in the format of a table.

The flow definition table has description of a branch destination and description of a branch condition. In the flow definition table indicated by the reference symbol B in FIG. 8, description of a branch destination states that the flow proceeds to the condition branch L3 if True at the condition branch L1; and the flow proceeds to the condition branch L2 if False at the condition branch L1, for example.

In the flow definition table indicated by reference symbol B in FIG. 8, the description of a branch condition states that true determination is made at the condition branch L1 if the value of the eGFR is less than 50 (eGFR<50), for example.

In the present workflow generating apparatus 1, the information of the policy workflow may be managed by using such a flow definition table.

The existing policy obtaining unit 101 may obtain the flow definition table of an existing policy workflow together with the existing policy workflow. The existing policy obtaining unit 101 may generate a flow definition table based on the existing policy workflow.

The policy candidate generating unit 102 generates a policy candidate by adding a perturbation to an existing policy workflow.

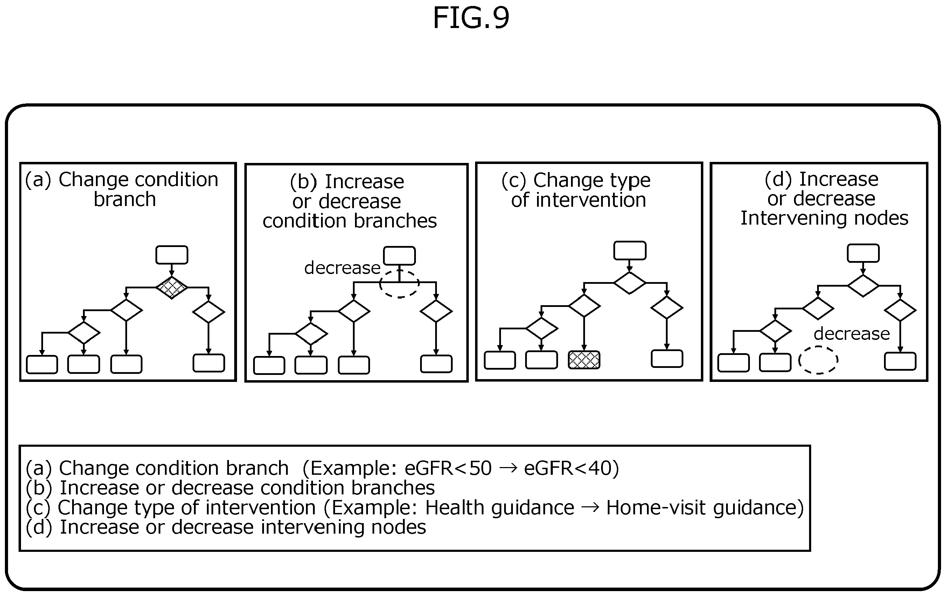

FIG. 9 is a diagram illustrating an example of a method for adding a perturbation in the workflow generating apparatus 1 of the one embodiment.

FIG. 9 illustrates the four patterns (a) to (d) of adding a perturbation as follows.

(a) Change a condition at a condition branch (for example, change eGFR<50 to eGFR<40)
(b) Reduce condition branches or increase condition branches
(c) Change an intervention type of an intervening node (e.g., change health guidance to visiting guidance)
(d) Reduce intervening nodes or increase intervening nodes

The policy candidate generating unit 102 generates multiple policy candidates by providing such a perturbation to a condition branch or a node in an existing policy workflow. The method of providing a perturbation to each condition branch or each node is defined in advance.

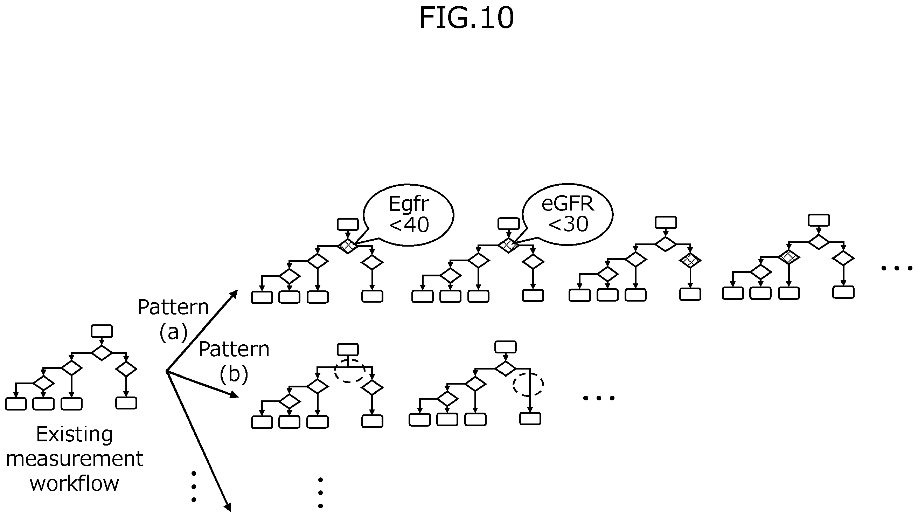

FIG. 10 is a diagram illustrating an example of a method for generating a policy candidate in a policy candidate generating unit 102 of the workflow generating apparatus 1 of the one embodiment.

The policy candidate generating unit 102 creates a policy candidate by, for example, adding perturbation of the above pattern (a) to the existing policy workflow. At this time, by changing a condition branch added with a perturbation and/or changing a threshold of the same condition branch, variation of the perturbation is increased and multiple types of policy candidates are generated.

In addition, when generating a policy candidate by adding a perturbation of the above pattern (b), the policy candidate generating unit 102 may increase the variation of the perturbations by changing a condition branches to be reduced and generate multiple types of policy candidates. Similarly, the policy candidate generating unit 102 may generate policy candidates by adding a perturbation of the pattern (c) or the pattern (d).

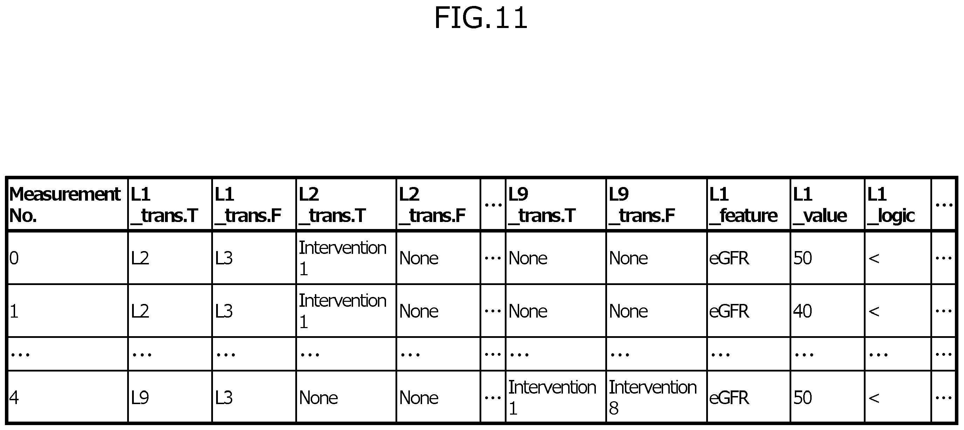

FIG. 11 is a diagram illustrating an example of multiple policy candidates generated by the policy candidate generating unit 102 of the workflow generating apparatus 1 of the one embodiment.

FIG. 11 illustrates flow definition tables of each of multiple policy candidates. Each of policy candidate has a unique policy No., and in FIG. 11, four policy candidates with policy No. 1 to 4 are illustrated. In FIG. 11, a policy candidate with a policy No. 0 is an existing policy workflow.

For example, in the policy candidate with a policy No. 1, the threshold of the branch condition L1 is changed to 40 from 50 of that of the policy candidates corresponding to the existing policy (with a policy No. 0). In addition, in the policy candidate with a policy No. 4, a branch condition L9 is added from the policy candidates corresponding to the existing policy (with a policy No. 0).

The policy candidate generating unit 102 generates multiple candidate workflows (policy candidates) in which a perturbation (change) is added to a part of an existing workflow that defines intervening nodes (following contents) that multiple condition branches and branch destinations reach.

The information of the policy candidates generated by the policy candidate generating unit 102 may be stored in a predetermined storing region of the storing device 10d.

The policy candidate KPI predicting unit 103 predicts a KPI of each policy candidate generated by the policy candidate generating unit 102.

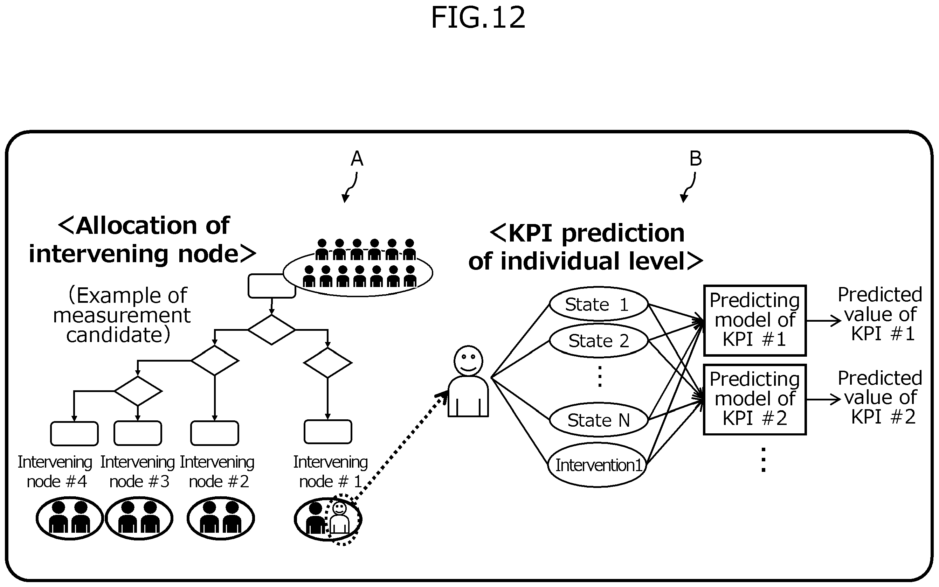

FIG. 12 is a diagram illustrating a process performed by a policy candidate KPI predicting unit 103 of the workflow generating apparatus 1 of the one embodiment.

The policy candidate KPI predicting unit 103 first trances, for each individual, a policy workflow through multiple condition branches on the basis of the individual state data and determines an intervening node(following contents) to be reached by specifying the intervening node.

In FIG. 12, the reference symbol A represents a process that determines which intervening node is allocated to an individual in a policy candidate.

In the policy candidate represented by the reference symbol A in FIG. 12, the policy candidate KPI predicting unit 103 specifies a node (intervening node) allocated to a particular individual by sequentially making selections along the condition branches from the upstream side to the downstream side of the policy candidates for the particular individual.

Then, the policy candidate KPI predicting unit 103 performs various KPI prediction based on the individual state data and the intervening node allocated to the individual.

In FIG. 12, the reference symbol B represents a process that predicts a personal-level KPI.

For example, if the KPI is a CKD new onset ratio, the policy candidate KPI predicting unit 103 inputs the state $(s_1, ..., s_N)$ and intervening nodes $(T_1, ..., T_M)$ to a predetermined predicting model (KPI predicting model) for each individual and responsively outputs a CKD new onset ratio. A predicting model may be provided for each KPI.

A predicting model may be constructed by applying a machine learning algorithm such as Bayesian model learning or deep learning to the previous machine learning data.

A predicting model may be, for example, a deep learning model (deep neural network). A neural network may be hardware circuitry, or may be a virtual network provided by means of software that connects layers virtually constructed on a computer program by the processor 10a (see FIG. 6) or the like.

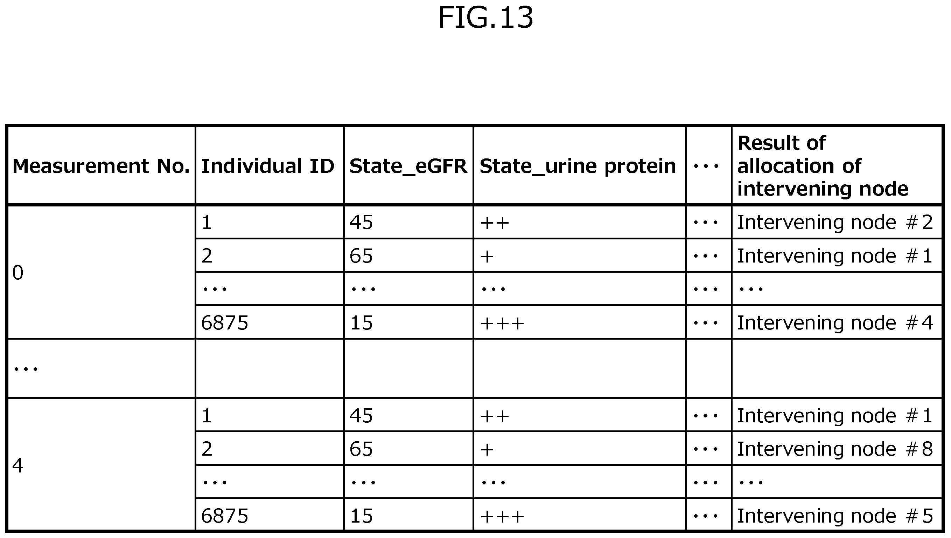

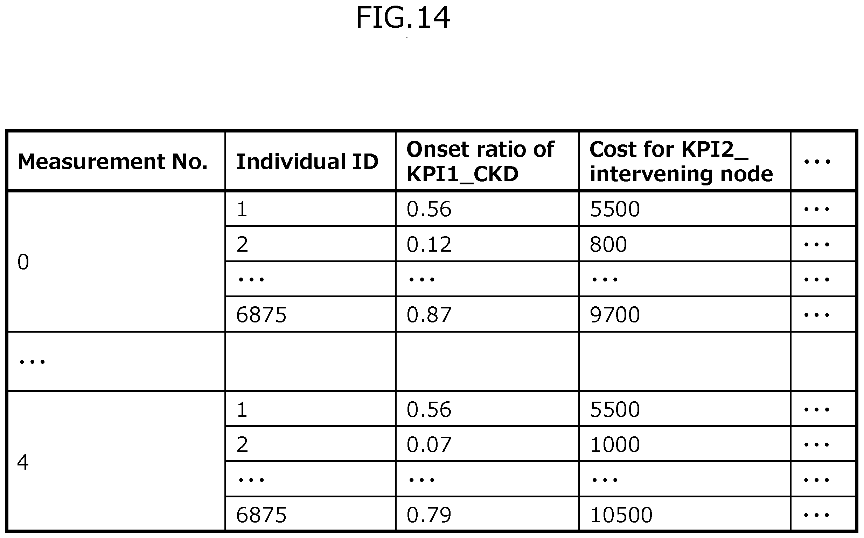

FIG. 13 is a diagram illustrating an example of a state of each individual and a result of allocating an intervening node for each policy candidate in the workflow generating apparatus q of an example of the one embodiment; and FIG. 14 is a diagram illustrating a result of predicting a KPI of each individual for each policy candidate in the workflow generating apparatus 1 of an example of the one embodiment.

The example of these FIGS. 13 and 14 assumes the number of policy candidates is four and the number of individuals is 6,875.

FIG. 13 illustrates a value corresponding to each branch condition and a result of intervening node allocation of each individual.

The individual of each policy illustrated in FIG. 14 corresponds to each individual of each policy in FIG. 13. In some policy, a KPI may change as the result of node allocation changes. For example, in FIG. 13, an individual having an individual ID of 6875 is allocated to the intervening node #4 in the existing policy (policy No. 0), but is allocated to the intervening node #5 in the policy No. 4.

As a result, as illustrated in FIG. 14, this individual having an individual ID of 6875 has a KPI1_CKD onset ratio of 0.87 and a KPI2_ intervening node cost of 9700 in the existing policy (policy No. 0), whereas a KPI1_CKD onset ratio of 0.79 and a KPI2_ intervening node cost of 10500 in the policy No. 4.

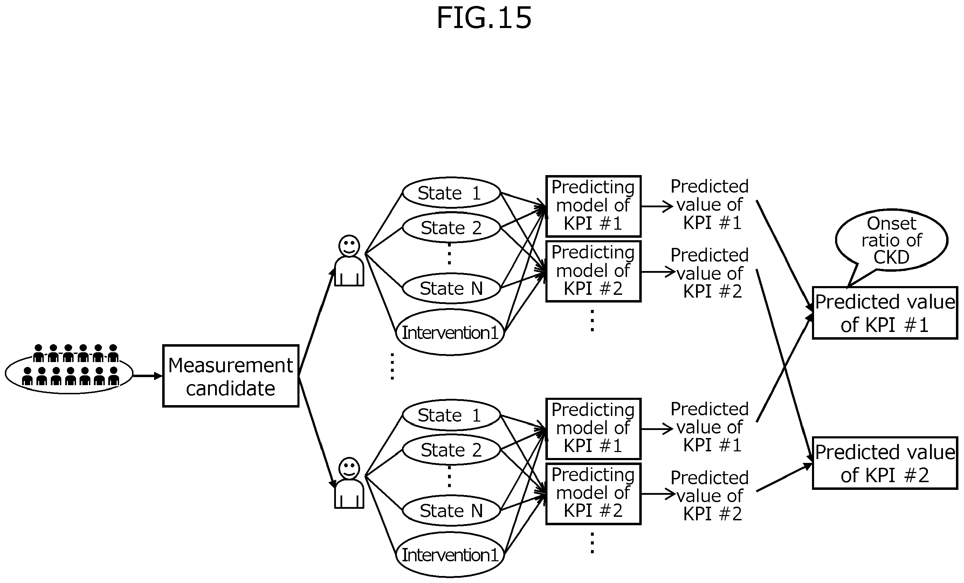

FIG. 15 is a diagram illustrating a method for calculating a KPI predicted value by the policy candidate KPI predicting unit 103 of the workflow generating apparatus 1 of an example of the one embodiment.

The policy candidate KPI predicting unit 103 obtains a KPI predicted value for each of all individuals by inputting information on the state of the individual and information on the intervening node of the individual to a KPI predicting model for each policy. A KPI predicting model is prepared for each KPI.

The example illustrated in FIG. 15 illustrates a KPI #1 predicting model that generates a KPI #1 predicted value and a KPI #2 predicting model that generates a KPI #2 predicted value.

The policy candidate KPI predicting unit 103 calculates the KPI #1 predicted value of a policy candidate by calculating the average value of KPI #1 predicted value for all individuals calculated for the same policy candidate. Similarly, the policy candidate KPI predicting unit 103 calculates the KPI#2 predicted value of a policy candidate by calculating the average value of KPI #2 predicted value for all individuals calculated for the same policy candidate.

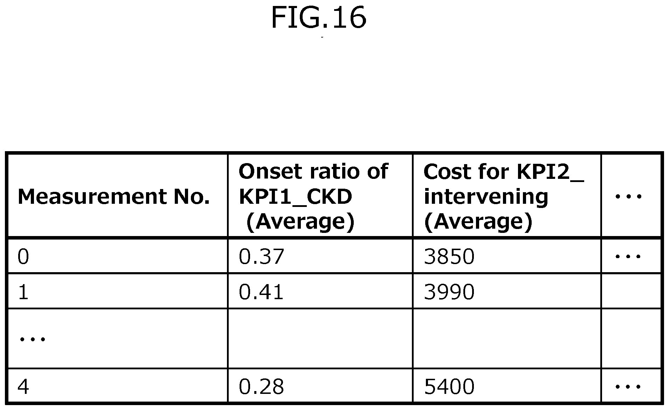

FIG. 16 is a diagram illustrating an example of an ultimate KPI predicted value predicted by the policy candidate KPI predicting unit 103 of the workflow generating apparatus 1 of an example of the one embodiment.

As illustrated in FIG. 16, the policy candidate KPI predicting unit 103 calculates an average value of KPI predicted values of each type of KPI for each policy candidate. The policy candidate KPI predicting unit 103 calculates KPI predicted values (average values) of all the types of KPI for all the policy candidates.

Further, the policy candidate KPI predicting unit 103 obtains, for every policy candidate, a difference between a KPI predicted value of an existing policy and a KPI predicted value of the policy candidate, and obtains a fluctuation vector of each perturbation. A vector representing a difference between a KPI predicted value of an existing policy and a KPI predicted value of each policy candidate may be referred to as a difference vector.

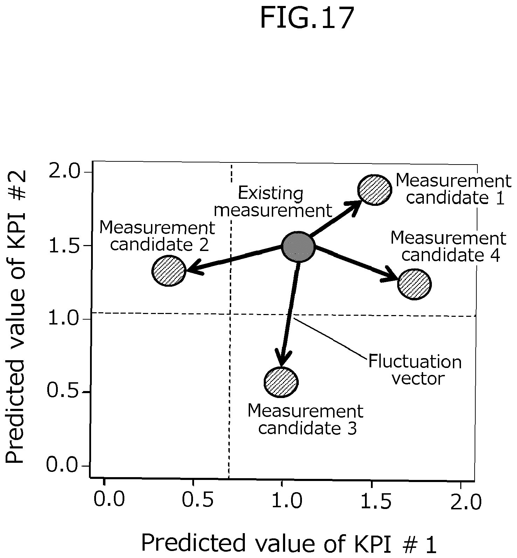

FIG. 17 is a diagram illustrating a method for generating a fluctuation vector by the policy candidate KPI predicting unit 103 of the workflow generating apparatus 1 of an example of the one embodiment.

FIG. 17 illustrates an example having two types of KPI in which example an existing policy and policy candidates 1-3 are arranged in a two-dimensional coordinate space having a horizontal axis representing a predicted value of the KPI #1 and a vertical axis representing a predicted value of the KPI #2. FIG. 17 illustrates four difference vectors representing differences of the respective KPI values of the policy candidates 1-4 from the KPI predicted value of the existing policy.

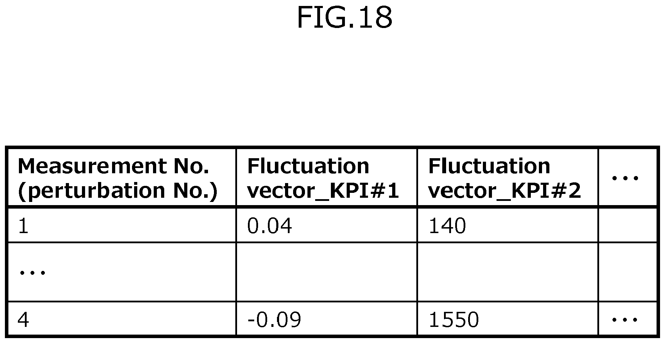

FIG. 18 is a diagram illustrating an example of a fluctuation vector generated by the policy candidate KPI predicting unit 103 of the workflow generating apparatus 1 of an example of the one embodiment.

FIG. 18 illustrates, for each of policy candidate 1 to 4, a fluctuation vector (fluctuation vector_KPI#1) of the KPI #1 from an existing policy and a fluctuation vector (fluctuation vector_KPI#2) of the KPI #2 from the existing policy.

The policy candidate KPI predicting unit 103 calculates a KPI fluctuation vector (difference between a KPI predicted value of the existing workflow and a KPI predicted value of each of the multiple candidate workflows) of the candidate workflow (policy candidates) from the existing workflow.

The policy candidate KPI predicting unit 103 stores information of the generated fluctuation vector of the KPI predicted value of each policy candidate into a predetermined storing region of the storing device 10d.

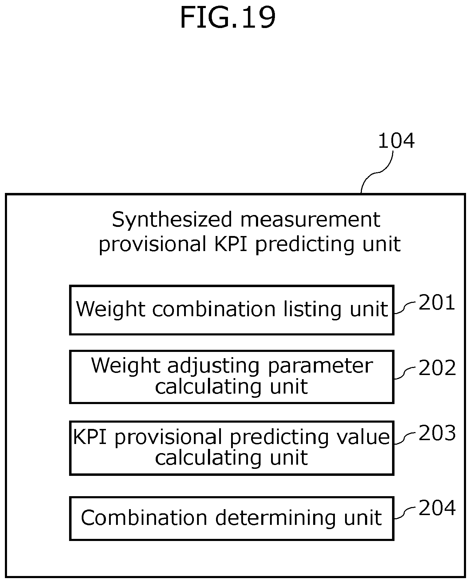

FIG. 19 is a diagram illustrating an example of a functional configuration a synthesized policy provisional KPI predicting unit 104 of the workflow generating apparatus 1 of an example of the one embodiment.

The synthesized policy provisional KPI predicting unit 104 generates a synthesized policy based on the respective KPI predicted value of each policy candidates calculated by the policy candidate KPI predicting unit 103. The synthesized policy provisional KPI predicting unit 104 generates multiple synthesized policies by combining two or more of the multiple KPI fluctuation vectors.

If generating multiple policy candidates to be synthesized that occur perturbations having overlapping influence ranges, the synthesized policy provisional KPI predicting unit 104 predicts a KPI, setting a higher weight to a policy candidate occurring a perturbation at the upper side when a KPI fluctuation vector is synthesized.

If a selected route in a policy workflow contains two or more perturbations, these perturbations have overlapping influence ranges.

As illustrated in FIG. 19, the synthesized policy provisional KPI predicting unit 104 has functions as a weight combination listing unit 201, a weight adjusting parameter calculating unit 202, a KPI provisional predicting value calculating unit 203, and a combination determining unit 204.

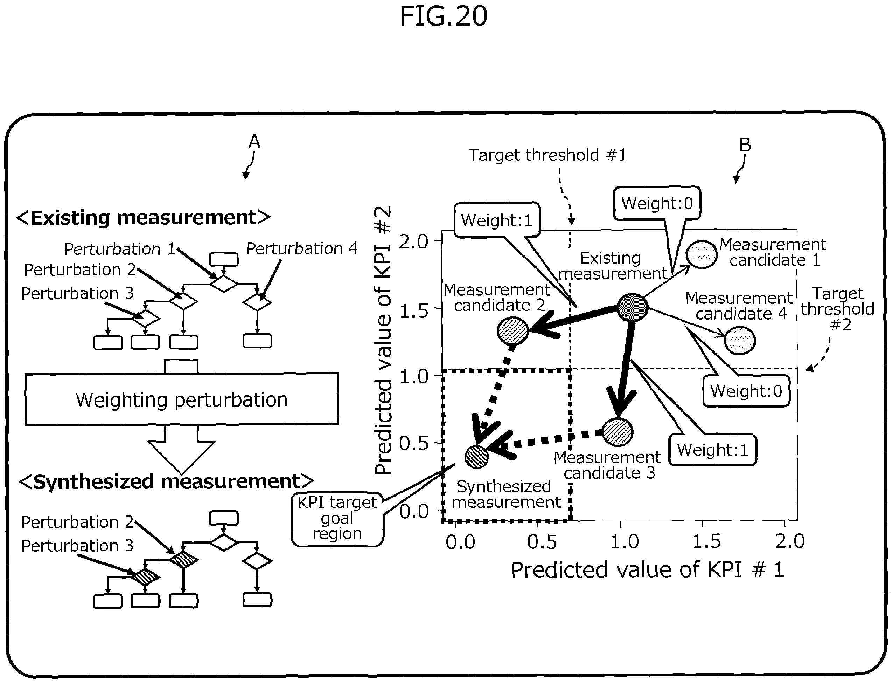

FIG. 20 is a diagram illustrating a process performed by the synthesized policy provisional KPI predicting unit 104 of the workflow generating apparatus 1 of an example of the one embodiment.

In FIG. 20, the reference symbol A represents a process in which the synthesized policy provisional KPI predicting unit 104 generates a synthesized policy by weighting the respective perturbations and adding the weighted perturbations to the existing policy. In addition, the symbol B represents a synthesized policy satisfying the KPI target.

The target threshold #1 is set for KPI #1 and the target threshold #2 is set for KPI #2. A region satisfying both of the target thresholds #1 and #2 may be referred to as a KPI target goal region.

The synthesized policy provisional KPI predicting unit 104 sets the weight (0 or 1 in the present embodiment) for each policy candidate to generate synthesized policy satisfying both of the target thresholds #1 and #2, in other words, being included in KPI target goal region.

The present workflow generating apparatus 1 generates a synthesized policy that satisfies all KPI targets by weighting the respective perturbations and adding the weighted perturbations to the existing policy. Therefore, the synthesized policy provisional KPI predicting unit 104 calculates a provisional value of the KPI prediction of the synthesized policy.

In the present workflow generating apparatus 1, the following Expression (1) represents a KPI provisional predicted value Y of the synthesized policy obtained by the weighting and adding of an existing policy and the fluctuation vectors.

$$Y = X_0 + W_1 \times \Delta X_1 + \cdot \cdot \cdot + W_N \times \Delta X_N \qquad (1)$$

Here, $X_0$ is a KPI predicted value of the existing policy. $W_1$ is the weight of the perturbation 1. $\Delta X_1$ is the fluctuation vector of the perturbation 1. $W_N$ is the weight of the perturbation N. $\Delta X_N$ is perturbation N fluctuation vector.

The weight combination listing unit 201 generates combination pattern of the weights $W_1$ to $W_N$ to be used in the KPI provisional predicted value Y of the synthesized policy represented by the above Expression (1). That is, the weight combination listing unit 201 generates a combination pattern of weights to be applied to the perturbations. The combination pattern of weights may be referred to as a weight pattern.

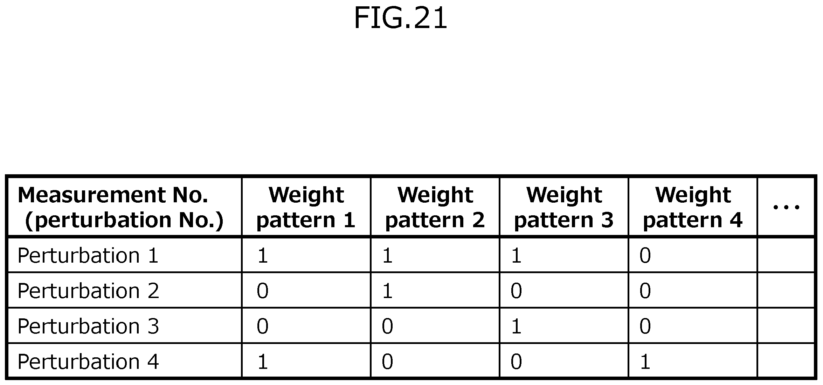

FIG. 21 is a diagram illustrating an example of combination patterns of weights applied to perturbations in the workflow generating apparatus 1 of an example of the one embodiment.

In the example of FIG. 21, multiple types of weight pattern (for example, weight pattern 1 to 4) are associated with perturbations 1 to 4. The weight pattern is a combination of the weights set for the perturbations 1 to 4. In the example illustrated in FIG. 21, the weight of each perturbation is represented by 0 or 1, a perturbation set with a weight of 1 is used for a synthesized policy, and a perturbation set with a weight of 0 is not used for a synthesized policy.

For example, a weight pattern 1 indicates that the perturbation 1 and the perturbation 4 are used for a synthesized policy, but the perturbation 2 and the perturbation 3 are not used. For example, a weight pattern 4 indicates that only the perturbation 4 is used for a synthesized policy, but the perturbations 1 to 3 are not used.

The multiple types of combination patterns of weights illustrated in FIG. 21 represent perturbation candidates to be combined into an existing policy workflow. These combination patterns of weights may be referred to as weight combination candidates.

As described above with reference to FIG. 4, in providing multiple perturbations to an existing policy workflow when a synthesized policy is generated, if the influence ranges of the perturbations do not overlap, the KPI predicted value of the synthesized policy can be obtained by summing the KPI predicted value of the existing policy and the fluctuation vectors of the policy candidates.

In contrast to the above, as described above with reference to FIG. 5, in providing multiple perturbations to an existing policy workflow when a synthesized policy is generated, if the influence ranges of the perturbations overlap, the KPI predicted value of the synthesized policy is not obtained simply by summing the KPI predicted value of the existing policy and the fluctuation vectors of the policy candidates.

As a solution to the above, in providing multiple perturbations to an existing policy workflow when a synthesized policy is generated, if the influence ranges of the multiple perturbations overlap, the weight adjusting parameter calculating unit 202 sets parameters (weight adjusting parameters) for the above parameters on the basis of the relationship among the perturbations of the existing policy workflow.

The weight adjusting parameter calculating unit 202 sets the weight adjusting parameter such that a weight of an upper perturbation (at an upper point) of a policy workflow exerts a higher influence than a weight of a lower perturbation (at a lower point).

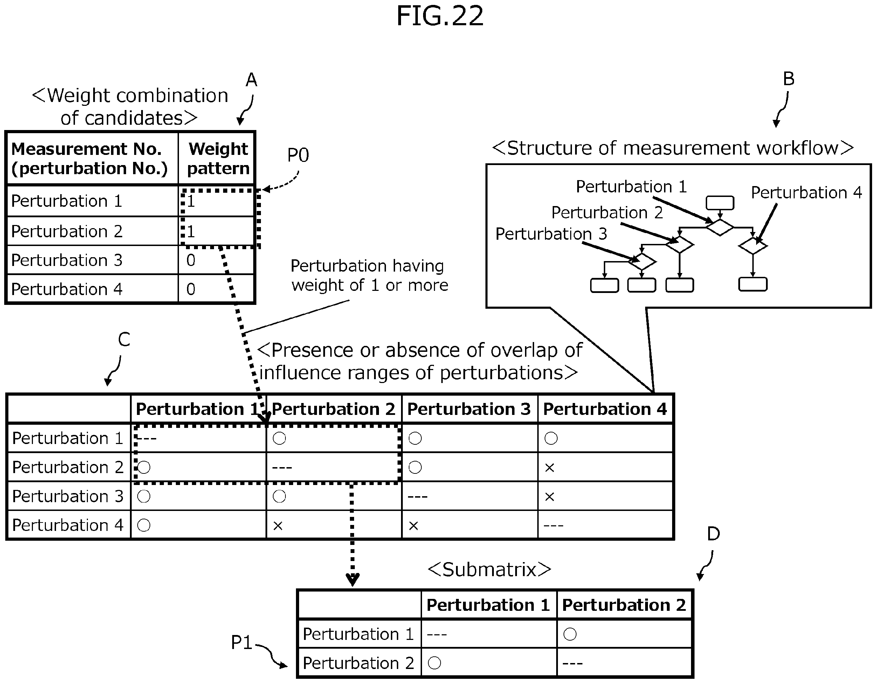

FIG. 22 is a diagram illustrating a process performed by a weight adjusting parameter calculating unit 202 of the workflow generating apparatus 1 of an example of the one embodiment.

The weight adjusting parameter calculating unit 202 determines a weight adjusting parameter $\eta_i$ (i=1,..., N) for a perturbation i among the multiple perturbations in the following steps (1) to (6).

Step (1): The weight adjusting parameter calculating unit 202 extracts a perturbation group P0 of perturbations each having a value of one or more among the weight combination candidates.

In FIG. 22, the reference symbol A illustrates weight combination candidates extracted from the multiple types of combinations of weight patterns generated by the weight combination listing unit 201. In FIG. 22, the perturbation 1 and the perturbation 2 each correspond to perturbations having a weight of one or more.

Step (2): The weight adjusting parameter calculating unit 202 specifies the presence or the absence of overlap of the respective influence ranges of the perturbations on the basis of the structure of the policy workflow, and obtains an overlap presence/absence matrix.

In FIG. 22, the reference symbol B illustrates an example of a policy workflow, and all the perturbations 1 to 4 are reflected in the measure workflow indicated by the reference symbol B. Furthermore, in FIG. 22, the reference symbol C illustrates an overlap presence/absence matrix representing the presence or the absence of overlap of the respective influence ranges of the perturbations in the policy workflow represented by the reference symbol B. In the overlap presence/absence matrix indicated by the reference symbol C in FIG. 22, for example, the perturbation 1 overlaps all of the perturbations 2 to 4, which means the perturbation 1 affects all the perturbations 2 to 4. Further, for example, the perturbation 2 only affects perturbation 3.

The weight adjusting parameter calculating unit 202 may generate an overlap presence/absence matrix on the basis the policy workflow using any known method, and the description of the method is omitted here.

The weight adjusting parameter calculating unit 202 extracts a submatrix P1 corresponding to the perturbation group P0 with reference to the overlap presence/absence matrix. In FIG. 22, reference symbol D represents a submatrix P1 corresponding to the perturbation group P0 extracted from the duplication presence/absence matrix indicated by reference symbol C.

Step (3): The weight adjusting parameter calculating unit 202 refers to submatrix P1 and sequentially specifies whether or not each perturbation i included in perturbation group P0 has an influence range overlapping an influence range of at least one perturbation. In the example of FIG. 22, the influence range of the perturbation 2 is included (i.e., overlap) in the influence range of perturbation 1.

Step (4): The weight adjusting parameter calculating unit 202 sets $\eta_i$=1 for a perturbation i having no overlapping of the influence range.

Step (5): On the other hand, for a perturbation i having overlapping of at least one influence range, the weight adjusting parameter calculating unit 202 sets a higher value to the parameter $\eta$ to an upper perturbation in the policy workflow, and sets a lower value to the parameter $\eta$ to a lower perturbation in the policy workflow.

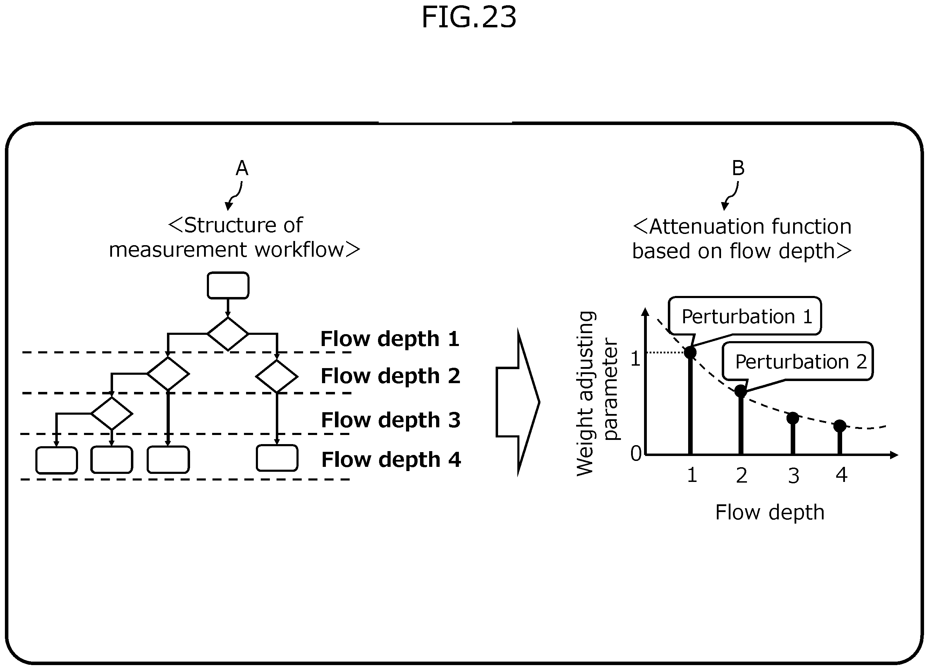

FIG. 23 is a diagram illustrating a flow depth of a policy workflow in the workflow generating apparatus 1 of an example of the one embodiment.

In FIG. 23, the reference symbol A illustrates the structure of a policy workflow and a flow depth. A policy workflow having a tree structure has a hierarchical structure. In such a policy workflow, an upper layer in the hierarchy is provided with a shallow flow depth while a lower layer in the hierarchy is provided with a deeper flow depth. In FIG. 23, 1 is set as the shallowest flow depth and 4 is set as the deepest flow depth.

Step (6): The weight adjusting parameter calculating unit 202 sets the parameter $\eta$ by applying an attenuation function based on flow depth.

In FIG. 23, the reference symbol B denotes an attenuation function based on the flow depth. In the policy workflow, the weight adjusting parameter calculating unit 202 sets a higher value to a weight adjusting parameter of a shallower (upper) flow depth, and a lower value to a weight adjusting parameter of a deeper (lower) flow depth.

When a flow depth of the target perturbation i is represented by x(i), the attenuation function for obtaining a weight adjusting parameter $\eta$ is expressed by, for example, the following Expression (2).

$$\eta(i) = \exp\{-ax(i)\} \qquad (2)$$

In the above Expression (2), the symbol "a" is a constant.

Furthermore, as the final value $\eta'(i)$, the weight adjusting parameter calculating unit 202 performs normalization represented by the following Expression (3) such that the average value of all the parameter $\eta'(i)$ becomes 1.

$$\eta'(i) = \frac{\exp\{-ax(i)\}}{\sum_{j=1}^{M} \exp\{-ax(j)\}} \qquad (3)$$

In the above Expression (3), the symbol M is the number of perturbations included in the target perturbation group P0. In the example indicated by the reference symbol A in FIG. 22, M=2, for example.

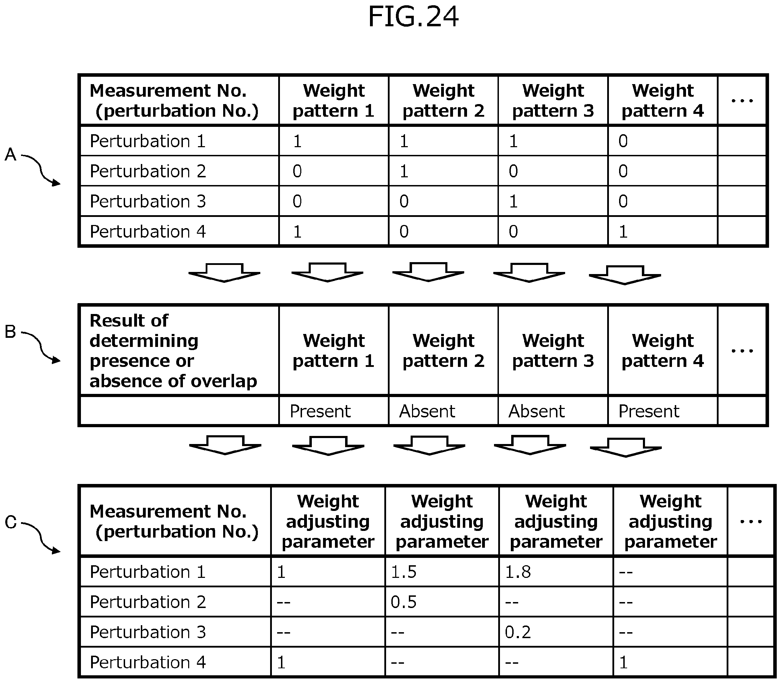

FIG. 24 is a diagram illustrating examples of a weight pattern and an adjusting parameter of the workflow generating apparatus 1 of an example of the one embodiment.

In FIG. 24, the reference symbol A represents weight combination patterns to perturbations, which is the same as weight combination patterns of the perturbations illustrated in FIG. 21. Furthermore, the reference symbol B represents a result of determining the presence or absence of overlapping of the perturbations. In addition, the reference symbol C represents the result of calculating a weight adjusting parameter.

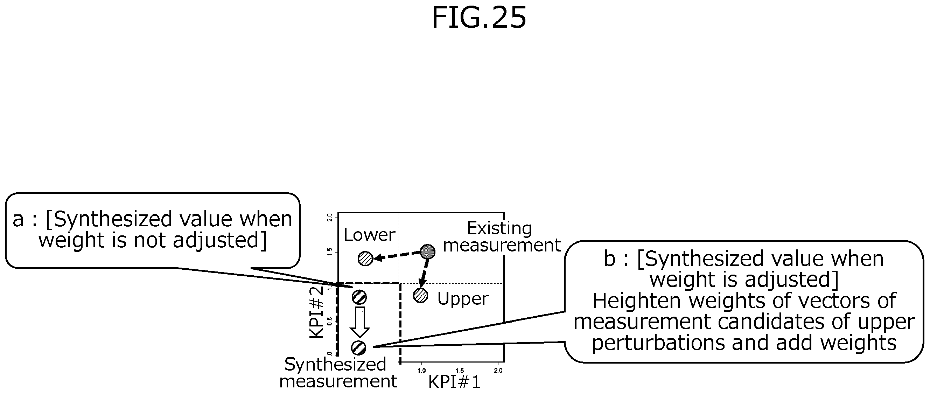

FIG. 25 is a diagram illustrating a synthesized policy after weight adjustment with a weight adjusting parameter in the workflow generating apparatus 1 of an example of the one embodiment.

FIG. 25 illustrates an example having two types of KPI and indicates synthesized policies (see the reference symbols a and b) generated by synthesizing an existing policy and a policy candidate applied with an upper perturbation and also a policy candidate applied with a lower perturbation in a two-dimensional coordinate space having a horizontal axis representing a predicted value of the KPI #1 and a vertical axis representing a predicted value of the KPI #2.

In FIG. 25, a reference symbol "a" indicates a synthesized value when the weight is not adjusted by using a weight adjusting parameter $\eta$. In contrast to the above, the symbol b represents a synthesized value obtained by heightening the weights of policy candidates of upper perturbations through weight adjustment with a weight adjusting parameter $\eta$ and adding weights.

The KPI provisional predicting value calculating unit 203 calculates, for each KPI, a KPI provisional predicted value of a synthesized policy.

The KPI provisional predicting value calculating unit 203 calculates a KPI provisional predicted value $Y^{(k)}$ for each KPI on the basis of the following Expression (4).

$$Y^{(k)} = X_0{}^{(k)} + \eta_1 W_1 \times \Delta X_1{}^{(k)} + \cdot \cdot \cdot + \eta_N W_N \times \Delta X_N{}^{(k)} \qquad (4)$$

The symbol k is a value for specifying any KPI among L types of KPI, and the symbol k is a natural number equal to or greater than one. The symbol $\eta_1$ is an adjusting parameter of the perturbation 1 and the symbol $\eta_N$ is an adjusting parameter of the perturbation N.

When multiple perturbations (changes) are included in one selected route in the candidate workflow, the synthesized policy provisional KPI predicting unit 104 calculates a KPI predicted value (KPI Provisional predicted value) of each of the multiple synthesized policy by reflecting the weight parameter $\eta$ set such that the weight (W) of an upper perturbation in the selected route is higher than the weight (W) of a lower perturbation in the selected route.

The synthesized policy provisional KPI predicting unit 104 calculates the KPI provisional predicted value (KPI predicted value) of each of the multiple synthesized policy by weighted addition of KPI predicted value of the existing workflow (existing policy) and the KPI fluctuation vectors (differences between KPI predicted value of the existing workflow and KPI predicted values of the respective candidate workflows).

The combination determining unit 204 calculates (determines) a weight combination ($W_1$, ..., $W_N$) by applying a combination optimization algorithm or the like such that all the KPI predicted values Y after the weight adjustment by weight adjusting parameters $\eta$ calculated by the KPI provisional predicting value calculating unit 203 satisfy the respective KPI targets.

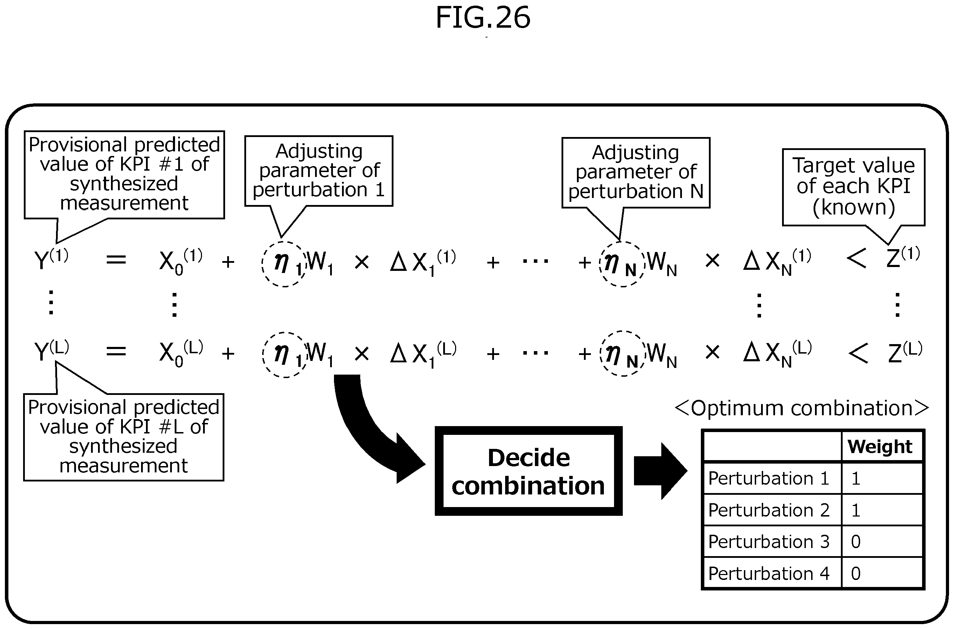

FIG. 26 is a diagram illustrating a process performed by a combination determining unit 204 of the workflow generating apparatus 1 of an example of the one embodiment.

The combination determining unit 204 checks whether provisional predicted values Y of the KPIs of all types of synthesized policy are less than the target values Z of the KPIs, that is, whether all the KPIs satisfy the KPI targets.

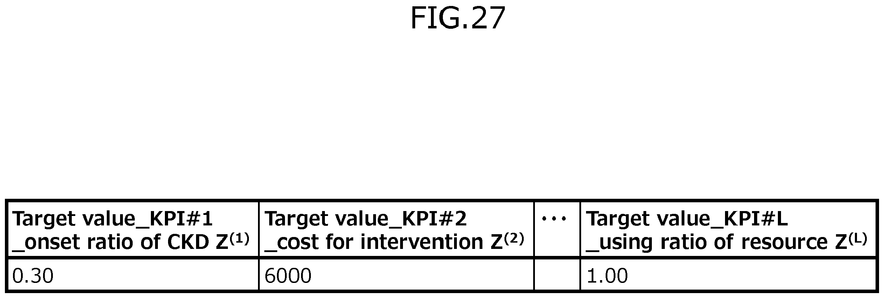

FIG. 27 is a diagram illustrating an example of a KPI target in the workflow generating apparatus 1 of an example of the one embodiment.

FIG. 27 illustrates an example that the KPI #1 is a CKD onset rate and KPI target $Z^{(1)}$ thereof is 0.30.

In the example of FIG. 26, the combination determining unit 204 checks, for example, whether the provisional predicted value $Y^{(1)}$ of the KPI #1 of a synthesized policy is less than the target value $Z^{(1)}$ of KPI #1 (i.e., $Y^{(1)} < Z^{(1)}$).

Furthermore, the combination determining unit 204 checks, for example, whether the provisional predicted value $Y^{(L)}$ of a KPI #L of a synthesized policy is less than the target $Z^{(L)}$ of the KPI #L (i.e., $Y^{(L)} < Z^{(L)}$).

Then, the combination determining unit 204 determines a weight combination pattern that can make all the KPI satisfy the respective KPI targets as an optimum weight combination pattern for generating a synthesized policy that can achieve the KPI target.

The combination determining unit 204 may select multiple weight combination patterns as the optimal weight combination pattern for generating a synthesized policy that can achieve the KPI target.

The synthesized policy actual KPI predicting unit 105 generates a synthesized policy by adding multiple perturbations to the existing policy on the basis of the weight combination pattern determined by the combination determining unit 204, and performs actual KPI prediction of the synthesized policy.

Then, the synthesized policy actual KPI predicting unit 105 checks whether all the KPI predicted results satisfy the respective target conditions (KPI targets) in the actual KPI prediction of the synthesized policy.

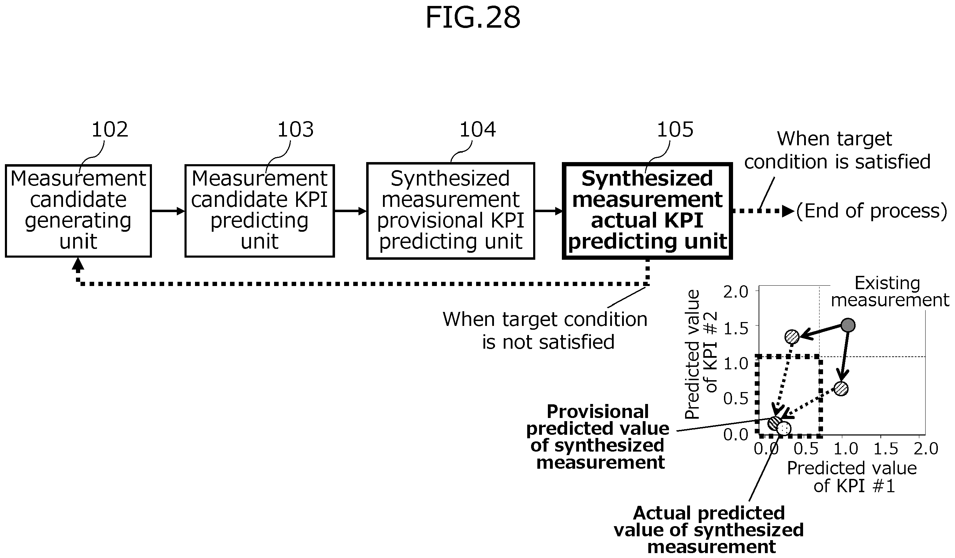

FIG. 28 is a diagram illustrating a process performed by a synthesized policy actual KPI predicting unit 105 of the workflow generating apparatus 1 of an example of the one embodiment.

If a KPI prediction result that does not satisfy target condition is present as a result of the checking whether all the KPI predicted results satisfy the respective target conditions (KPI targets) of the synthesized policy, the synthesized policy actual KPI predicting unit 105 changes the manner of providing the perturbations and causes the policy candidate generating unit 102 to regenerate a synthesized policy.

As a manner of providing perturbations at this time, the synthesized policy actual KPI predicting unit 105 may provide perturbations starting from a synthesized policy close to the target condition.

For example, the synthesized policy actual KPI predicting unit 105 obtains a difference between KPI predicted value and the target value for every synthesized policy. When a synthesized policy has multiple KPIs, this difference is obtained for each KPI, and the average value of the differences is obtained.

Then, a synthesized policy having the average of the differences is smaller than a predetermined threshold or that having the smallest average may be specified as the synthesized policy.

The synthesized policy actual KPI predicting unit 105 generates new policy candidates by reproviding multiple new patterns of perturbations (see FIGs.9 and 10) to the synthesized policy.

If confirming that all the KPI prediction results satisfy the target conditions (KPI targets) as a result of the checking whether all the KPI predicted results satisfy the respective target conditions (KPI targets) of the synthesized policy, the synthesized policy actual KPI predicting unit 105 determines the synthesized policy to be a remedial policy and ends the process.

The output controlling unit 106 outputs information of the remedial policies determined by the synthesized policy provisional KPI predicting unit 104. The output controlling unit 106 may generate the outputted information including the information of the remedial policies and present the outputted information to the user (policy developer). The outputted information is information obtained by visualizing the information of the remedial policies. The output controlling unit 106 may include the information of the remedial policy in the outputted information.

For example, the output controlling unit 106 may output the outputted information to the monitor or the like via the graphic processing device 10b.

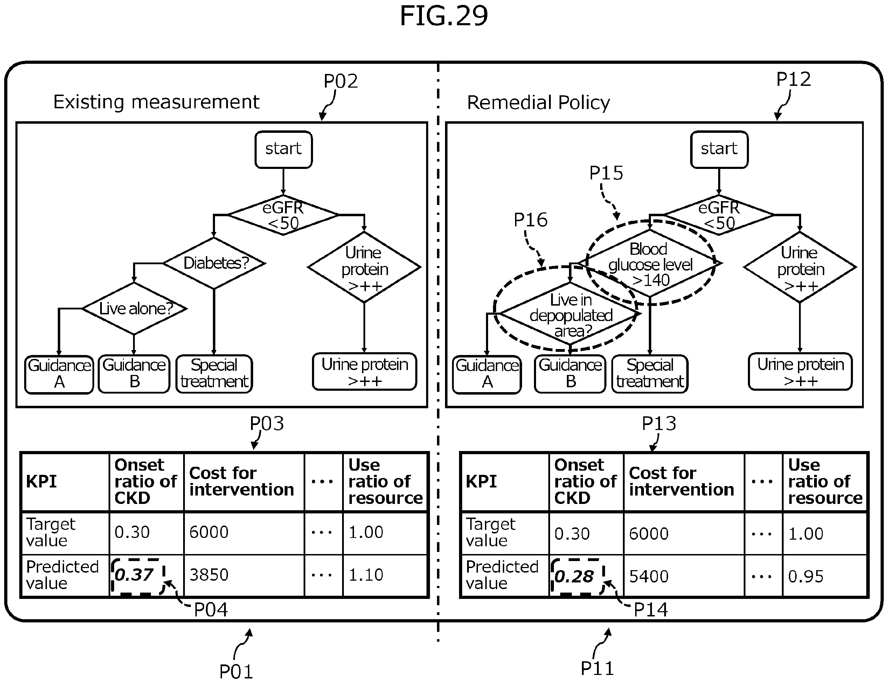

FIG. 29 is a diagram illustrating an example of outputted information generated by an output controlling unit 106 of the workflow generating apparatus 1 of an example of the one embodiment.

The outputted information illustrated in FIG. 29 is displayed on, for example, a monitor (not illustrated) of an information processing apparatus used by a user, and arranges information (see the reference sign P01) of the existing policy and information (the reference sign P11) of the remedial policy side by side.

In the information of the existing policy and the information of the remedial policy, the respective policy workflows (see the reference signs P02, and P12) are illustrated, and KPI information (see the reference signs P03, and P13) in which the target value and the predicted value of a KPI are associated is illustrated.

The user can compare and confirm the existing policy and the remedial policy.

In the policy workflow of the remedial policy, the visibility may be enhanced by a marker or changing the display color on a changed part (perturbation) from the policy workflow of the existing policy (see the reference signs P15, and P16).

Alternatively, in the KPI information of the existing policy, the visibility may be enhanced by changing the font and/or the display color of the value of KPI below the target value (see the reference signs P04). In addition, the visibility may be enhanced by a marker or changing the display color on a changed part that indicates a predicted value of a KPI below the target value in the existing policy has improved in KPI information of the remedial policy (refer to the reference sign P14).

The output controlling unit 106 outputs the workflow of synthesized policy whose KPI provisional predicted value (KPI predicted value) satisfies the target value.

(C) Operation:

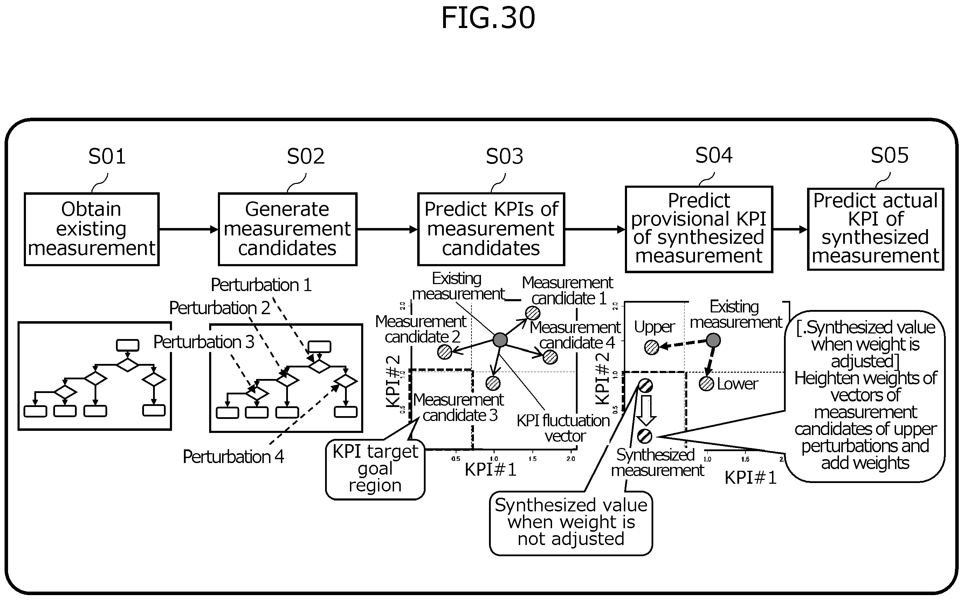

An outline of a process in the workflow generating apparatus 1 according to an example of an embodiment configured as described above will now be described with reference to a flow chart (Steps S01 to S05) illustrated in FIG. 30.

In Step S01, the existing policy obtaining unit 101 obtains an existing policy.

In Step S02, the policy candidate generating unit 102 generates multiple policy candidates by adding a perturbations to the existing policy workflow.

In Step S03, the policy candidate KPI predicting unit 103 predicts a KPI of each policy candidate generated by the policy candidate generating unit 102. Further, the policy candidate KPI predicting unit 103 obtains, for all the policy candidates, a difference between a KPI predicted value of an existing policy and a KPI predicted value of policy candidate, and obtains a fluctuation vector of each perturbation.

In Step S04, the synthesized policy provisional KPI predicting unit 104 generates a synthesized policy by synthesizing fluctuation vectors of the policy candidates on the basis of the respective KPI predicted values of the policy candidates calculated by the policy candidate KPI predicting unit 103.

In addition, the synthesized policy provisional KPI predicting unit 104 sets a weight adjusting parameters based on the relationship between perturbations on the existing policy workflow, and calculating a KPI provisional predicted value of each synthesized policy by reflecting the calculated weight adjusting parameters. If the influence ranges of the perturbations occur in generating multiple policy candidates to be synthesized, the synthesized policy provisional KPI predicting unit 104 predicts a KPI, setting a higher weight to a policy candidate occurring a perturbation at the upper side when a KPI fluctuation vectors are synthesized.

In Step S05, the synthesized policy actual KPI predicting unit 105 generates a synthesized policy by adding multiple perturbations to the existing policy on the basis of the weight combination pattern determined by the combination determining unit 204, and performs actual KPI prediction of the synthesized policy.

A synthesized policy that all KPI prediction results satisfy the target conditions (KPI targets) are adopted as a remedial policy.

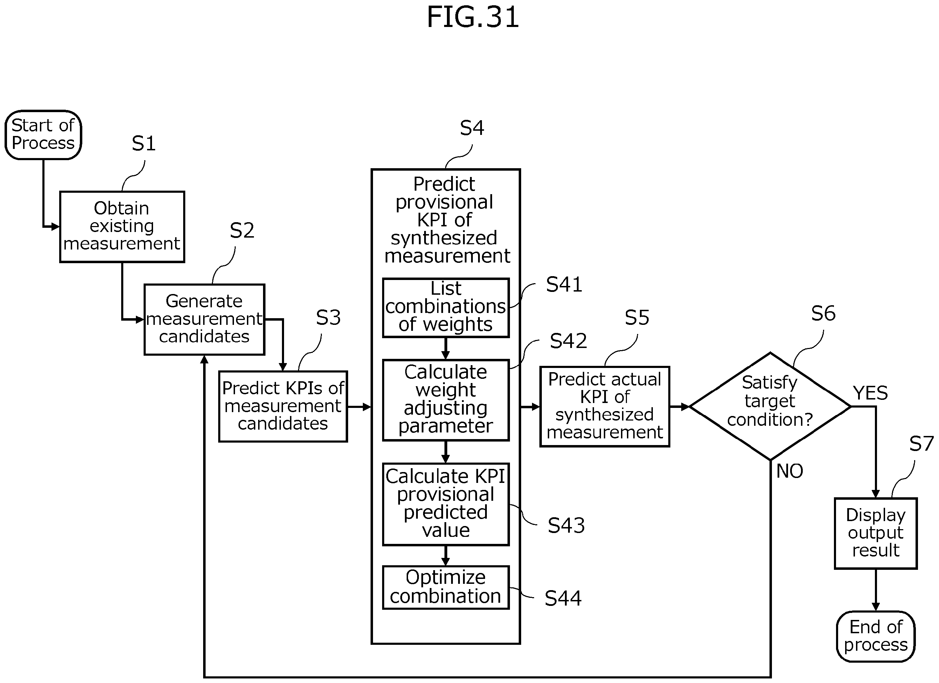

Next, a detailed process in the workflow generating apparatus 1 according to an example of the embodiment will now be described with reference to a flow chart (Steps S1-S7 and S41-S44) illustrated in FIG. 31. Note that the like reference symbols designate the same processes as those described above in the drawings.

In Step S1, the existing policy obtaining unit 101 obtains an existing policy.

In Step S2, the policy candidate generating unit 102 generates multiple policy candidates by adding perturbations to the existing policy workflow.

In Step S3, the policy candidate KPI predicting unit 103 predicts a KPI of each policy candidate generated by the policy candidate generating unit 102. Further, the policy candidate KPI predicting unit 103 obtains, for all the policy candidates, a difference between a KPI predicted value of an existing policy and a KPI predicted value of each policy candidate, and obtains a fluctuation vector of each perturbation.

The process for predicting the provisional KPIs of the synthesized policy in Step S4 includes the process of Steps S41 to S44.

In Step S41, the weight combination listing unit 201 generates multiple weight combination patterns to be applied to the perturbations.

In Step S42, in providing multiple perturbations to an existing policy workflow when a synthesized policy is generated, if the influence ranges of the perturbations overlap, the weight adjusting parameter calculating unit 202 sets parameters for the above weights on the basis of the relationship among the perturbations of the existing policy workflow.

In step S43 of steps, the KPI provisional predicting value calculating unit 203 calculates, for each KPI, a KPI provisional predicted value of the synthesized policy.

In S44 of steps, the combination determining unit 204 calculates (determines) a weight combination such that all the KPI predicted values after the weight adjustment by weight adjusting parameters calculated by the KPI provisional predicting value calculating unit 203 satisfy the respective KPI targets.

After that, in Step S5, the synthesized policy actual KPI predicting unit 105 generates a synthesized policy by adding multiple perturbations to the existing policy on the basis of the weight combination pattern determined by the combination determining unit 204, and performs actual KPI prediction of the synthesized policy.

In Step S6, the synthesized policy actual KPI predicting unit 105 checks whether all the KPI predicted results satisfy the respective target conditions (KPI targets) in the actual KPI prediction of the synthesized policy.

If a KPI prediction result that does not satisfy the target condition is present (see No route of Step S6), the process returns to Step S2 that changes the manner of providing the perturbations and causes the policy candidate generating unit 102 to regenerate a synthesized policy.

On the other hand, if all the KPI prediction results satisfy the target conditions (KPI target) as a result of the checking in Step S6 (see YES route in Step S6), the process proceeds to Step S7.

In Step S7 of steps, the output controlling unit 106 outputs the remedial policy determined by the synthesized policy provisional KPI predicting unit 104. Then, the process ends.

(D) Effect:

As described above, according to the workflow generating apparatus 1 as an example of the embodiment, if the influence ranges of the perturbations overlap in generating multiple policy candidates to be synthesized, the synthesized policy provisional KPI predicting unit 104 predicts a KPI, setting a higher weight to a policy candidate occurring a perturbation at the upper side when a KPI fluctuation vector is synthesized.

Considering that a lower perturbation is affected by an upper perturbation in a policy workflow as the above makes it possible to predict more accurate KPIs.

In addition, the weight adjusting parameter calculating unit 202 sets a higher value to a weight adjusting parameter $\eta$ of a shallower (upper) flow depth, and a lower value to a weight adjusting parameter $\eta$ of a deeper (lower) flow depth by using an attenuation function. This makes it possible to set a higher weight to a policy candidate occurring a perturbation at the upper side when a KPI fluctuation vector is synthesized.

(E) Miscellaneous:

The disclosed techniques are not limited to the embodiment described above, and may be variously modified without departing from the scope of the present embodiment. The respective configurations and processes of the present embodiment can be selected, omitted, and combined according to the requirement.

For example, as illustrated in FIG. 17 and the like, in the above-described embodiment assumes that two types of KPI are present and indicates a difference vector in a two-dimensional coordinate space having a horizontal axis representing a predicted value of the KPI #1 and a vertical axis representing a predicted value of the KPI #2, but is not limited to this. Alternatively, three types of KPI may be present, and the coordinate space in which a difference vector is expanded may be a three or more dimensional space.

In the above-described embodiment, the weight W used in KPI provisional predicted value Y of synthesized policy is either 0 or 1, but the present invention is not limited thereto and may be a value other than 0 and 1.

Further, in the above-described embodiment, the method of adding a perturbation to the policy workflow is not limited to that illustrated in FIG. 9, and a perturbation may be added by a method other than these methods.

In addition, those ordinary skilled in the art can carry out and manufacture of the present embodiments with reference to this disclosure.

[Description of Reference Sign]

| 1 | workflow generating apparatus |
|---|---|
| 10 | computer |
| 10a | processor |
| 10b | graphic processing device |
| 10c | memory |
| 10d | storing device |
| 10e | IF device |
| 10f | IO device |
| 10g | reader |
| 10h | program |
| 10i | recording medium |
| 10j | bus |
| 101 | existing policy obtaining unit |
| 102 | policy candidate generating unit |
| 103 | policy candidate KPI predicting unit |
| 104 | synthesized policy provisional KPI predicting unit |
| 105 | synthesized policy actual KPI predicting unit |
| 106 | output controlling unit |
| 201 | weight combination listing unit |
| 202 | weight adjusting parameter calculating unit |
| 203 | KPI provisional predicting value calculating unit |
| 204 | combination determining unit |

**Claims**

1. A computer-implemented method for generating a workflow comprising:

   generating a plurality of candidate workflows by making a modification to part of an existing workflow, the existing workflow defining a plurality of condition branches and following contents at respective destinations of the plurality of condition branches;
   obtaining a plurality of KPI (Key Performance Indicator) fluctuation vectors one for each of the plurality of candidate workflows from the existing workflow;
   generating a plurality of synthesized policies by synthesizing two or more of the plurality of KPI fluctuation vectors;
   calculating, when one of selected routes of the plurality of candidate workflows contains a plurality of the modifications, a KPI predicted value of each of the plurality of synthesized policies by reflecting a weight parameter on the KPI fluctuation vector, the weight parameter being set such that a weight for a modification to an upper point of the selected route among the plurality of modifications is higher than a weight for a modification to a lower point of the selected route among the plurality of modifications; and
   outputting a workflow of one of the plurality of synthesized policies the KPI predicted value of which satisfies a target value.

2. The computer-implemented method according to claim 1, wherein the calculating of the KPI predicted value comprises summing a KPI predicted value of the existing workflow and a weighed KPI fluctuation vector obtained by weighing the KPI fluctuation vector.

3. The computer-implemented method according to claim 1 or 2, wherein the weight parameter is set according to a flow depth of each of the plurality of candidate workflows.

4. A workflow generating program for causing a computer to execute a process comprising:

   generating a plurality of candidate workflows by making a modification to part of an existing workflow, the existing workflow defining a plurality of condition branches and following contents at respective destinations of the plurality of condition branches;
   obtaining a plurality of KPI (Key Performance Indicator) fluctuation vectors one for each of the plurality of candidate workflows from the existing workflow;
   generating a plurality of synthesized policies by synthesizing two or more of the plurality of KPI fluctuation vectors;
   calculating, when one of selected routes of the plurality of candidate workflows contains a plurality of the modifications, a KPI predicted value of each of the plurality of synthesized policies by reflecting a weight parameter on the KPI fluctuation vector, the weight parameter being set such that a weight for a modification to an upper point of the selected route among the plurality of modifications is higher than a weight for a modification to a lower point of the selected route among the plurality of modifications; and
   outputting a workflow of one of the plurality of synthesized policies the KPI predicted value of which satisfies a target value.

5. The workflow generating program according to claim 4, wherein the calculating of the KPI predicted value comprises summing a KPI predicted value of the existing workflow and a weighed KPI fluctuation vector obtained by weighing the KPI fluctuation vector.

6. The workflow generating program according to claim 4 or 5, wherein the weight parameter is set according to a flow depth of each of the plurality of candidate workflows.

# FIG.1

A → KPI prediction

B → KPI fluctuation vector

C → KPI prediction of synthesized measurement

**A — KPI prediction**

Measurement candidate 2

Existing measurement

KPI#2 (vertical axis)

KPI#1 (horizontal axis)

Measurement candidate 1

**B — KPI fluctuation vector**

KPI#2 (vertical axis)

KPI#1 (horizontal axis)

**C — KPI prediction of synthesized measurement**

KPI#2 (vertical axis)

KPI#1 (horizontal axis)

**Synthesized measuremen**

Predicting by referring to simple sum of KPI fluctuation vectors

EP 4 300 390 A1

# FIG.2

**CKD following framework**

(CKD:Chronic Kidney Disease)

Specific medical checkup (medical checkup·primary care physician)

| Proteinuria +2 or higher | or | eGFR:50 ml/min. less than 1.73 For a person over the age of seventy, eGFR:40 ml/min. less than 1.73 |

[Diabetic] Someone who satisfies at least one of the following
(1) HbA1C (NGSO) of 6.5 % or higher
(2) Fasting blood glucose level of 126 mg/dl or higher···
(3) Under medical treatment of diabetes (including treatment other than pharmaceutical therapy)

[Non-diabetic]

When requesting diabetic specialist in City ○△ for thorough checkup

When continuing follow-up by primary care physician

Requesting document for thorough checkup of City ○△ (diabetic)

Treatment by diabetic specialist

Directing document for health guidance by diabetic kidney disease of City ○△

Health guidance by primary care physician

Invitation for reexamination of CKD

Treatment by nephrologist

A

B

Example of individual state data
: eGFR=45

Condition branch (Ex: If eGFR<50, the flow proceeds to left route))

Intervening node

Intervention 4 (Following type A)

Intervention 3 (Following type B)

Intervention 2 (Following type C)

Intervention 1 (Not following)

EP 4 300 390 A1

# FIG.3

EP 4 300 390 A1

# FIG.4

A — [Existing measurement]

B — [Measurement candidate 1]

C — [Measurement Candidate 2]

D — [Synthesized measurement]

**100 people**

100 people — Perturbation A

100 people — Perturbation B

**100 people**

10 people, 10 people, 30 people, 50 people

(-10)(-5)(+15)

(-40)

10 People (-10), 5 People (-5), 45 People (+15), 10 People (-40)

Simple sum of respective influences of perturbations

| Result of node allocation | Result of allocation of existing measurement | **+** | Fluctuation of result of allocation due to perturbation A | **+** | Fluctuation of result of allocation due to perturbation B | **=** | Result of allocation of synthesized measurement |
|---|---|---|---|---|---|---|---|
| Result of KPI provisional prediction | Result of KPI prediction of existing measuremen | **+** | KPI fluctuation vector due to perturbation A | **+** | KPI fluctuation vector due to perturbation B | **=** | Result of KPI prediction of synthesized measurement |

EP 4 300 390 A1

# FIG.5

EP 4 300 390 A1

# FIG.6

EP 4 300 390 A1

# FIG.7

Workflow generating apparatus

| Existing measurement obtaining unit | 101 | 1 |

Measurement candidate generating unit — 102

Measurement candidate KPI predicting unit — 103

Synthesized measurement provisional KPI predicting unit — 104

Synthesized measurement actual KPI predicting unit — 105

Output controlling unit — 106

EP 4 300 390 A1

# FIG.8

| Measurement No. | L1 _trans.T | L1 _trans.F | L2 _trans.T | L2 _trans.F | ... | L9 _trans.T | L9 _trans.F | L1 _feature | L1 _value | L1 _logic | ... |
|---|---|---|---|---|---|---|---|---|---|---|---|
| 0 | L2 | L3 | Intervention 1 | None | ... | None | None | eGFR | 50 | < | ... |

<Description of branch destination>
For example, if True at condition branch L1,
the flow proceeds to L3.
If False at condition branch L1,
the flow proceeds to L2.

<Description of branch condition>
For example,
True determination is made
at condition branch L1 if eGFR<50.

# FIG.9

| (a) Change condition branch | (b) Increase or decrease condition branches | (c) Change type of intervention | (d) Increase or decrease Intervening nodes |

(a) Change condition branch  (Example: eGFR<50 → eGFR<40)
(b) Increase or decrease condition branches
(c) Change type of intervention (Example: Health guidance → Home-visit guidance)
(d) Increase or decrease intervening nodes

EP 4 300 390 A1

FIG.10

## FIG.11

| Measurement No. | L1 _trans.T | L1 _trans.F | L2 _trans.T | L2 _trans.F | ... | L9 _trans.T | L9 _trans.F | L1 _feature | L1 _value | L1 _logic | ... |
|---|---|---|---|---|---|---|---|---|---|---|---|
| 0 | L2 | L3 | Intervention 1 | None | ... | None | None | eGFR | 50 | < | ... |
| 1 | L2 | L3 | Intervention 1 | None | ... | None | None | eGFR | 40 | < | ... |
| ... | ... | ... | ... | ... | ... | ... | ... | ... | ... | ... | ... |
| 4 | L9 | L3 | None | None | ... | Intervention 1 | Intervention 8 | eGFR | 50 | < | ... |

EP 4 300 390 A1

# FIG.12

EP 4 300 390 A1

<Allocation of intervening node>

(Example of measurement candidate)

Intervening node #4

Intervening node #3

Intervening node #2

Intervening node # 1

A

<KPI prediction of individual level>

B

State 1

State 2

State N

Intervention1

Predicting model of KPI #1 → Predicted value of KPI #1

Predicting model of KPI #2 → Predicted value of KPI #2

# FIG.13

| Measurement No. | Individual ID | State_eGFR | State_urine protein | ··· | Result of allocation of intervening node |
|---|---|---|---|---|---|
| 0 | 1 | 45 | ++ | ··· | Intervening node #2 |
| | 2 | 65 | + | ··· | Intervening node #1 |
| | ··· | ··· | ··· | ··· | ··· |
| | 6875 | 15 | +++ | ··· | Intervening node #4 |
| ··· | | | | | |
| 4 | 1 | 45 | ++ | ··· | Intervening node #1 |
| | 2 | 65 | + | ··· | Intervening node #8 |
| | ··· | ··· | ··· | ··· | ··· |
| | 6875 | 15 | +++ | ··· | Intervening node #5 |

FIG.14

| Measurement No. | Individual ID | Onset ratio of KPI1_CKD | Cost for KPI2_ intervening node | · · · |
|---|---|---|---|---|
| 0 | 1 | 0.56 | 5500 | · · · |
| | 2 | 0.12 | 800 | · · · |
| | · · · | · · · | · · · | · · · |
| | 6875 | 0.87 | 9700 | · · · |
| · · · | | | | |
| 4 | 1 | 0.56 | 5500 | · · · |
| | 2 | 0.07 | 1000 | · · · |
| | · · · | · · · | · · · | · · · |
| | 6875 | 0.79 | 10500 | · · · |

EP 4 300 390 A1

FIG.15

# FIG.16

| Measurement No. | Onset ratio of KPI1_CKD (Average) | Cost for KPI2_ intervening (Average) | · · · |
|---|---|---|---|
| 0 | 0.37 | 3850 | · · · |
| 1 | 0.41 | 3990 | |
| · · · | | | |
| 4 | 0.28 | 5400 | · · · |

EP 4 300 390 A1

# FIG.17

EP 4 300 390 A1

# FIG.18

| Measurement No. (perturbation No.) | Fluctuation vector_KPI#1 | Fluctuation vector_KPI#2 | ... |
|---|---|---|---|
| 1 | 0.04 | 140 | |
| ... | | | |
| 4 | -0.09 | 1550 | ... |

# FIG.19

104

Synthesized measurement
provisional KPI predicting unit

Weight combination listing unit — 201

Weight adjusting parameter
calculating unit — 202

KPI provisional predicting value
calculating unit — 203

Combination determining unit — 204

FIG.20

# FIG.21

| Measurement No. (perturbation No.) | Weight pattern 1 | Weight pattern 2 | Weight pattern 3 | Weight pattern 4 | ... |
|---|---|---|---|---|---|
| Perturbation 1 | 1 | 1 | 1 | 0 | |
| Perturbation 2 | 0 | 1 | 0 | 0 | |
| Perturbation 3 | 0 | 0 | 1 | 0 | |
| Perturbation 4 | 1 | 0 | 0 | 1 | |

EP 4 300 390 A1

# FIG.22

<Weight combination
of candidates>

| Measurement No. (perturbation No.) | Weight pattern |
|---|---|
| Perturbation 1 | 1 |
| Perturbation 2 | 1 |
| Perturbation 3 | 0 |
| Perturbation 4 | 0 |

A

P0

Perturbation having weight of 1 or more

B

<Structure of measurement workflow>

Perturbation 1
Perturbation 2
Perturbation 3
Perturbation 4

C

<Presence or absence of overlap of influence ranges of perturbations>

| | Perturbation 1 | Perturbation 2 | Perturbation 3 | Perturbation 4 |
|---|---|---|---|---|
| Perturbation 1 | --- | ○ | ○ | ○ |
| Perturbation 2 | ○ | --- | ○ | × |
| Perturbation 3 | ○ | ○ | --- | × |
| Perturbation 4 | ○ | × | × | --- |

<Submatrix>

D

| | Perturbation 1 | Perturbation 2 |
|---|---|---|
| Perturbation 1 | --- | ○ |
| Perturbation 2 | ○ | --- |

P1

EP 4 300 390 A1

# FIG.23

A

<Structure of
measurement workflow>

B

<Attenuation function
based on flow depth>

Flow depth 1

Flow depth 2

Flow depth 3

Flow depth 4

Perturbation 1

Perturbation 2

Weight adjusting parameter

1

0

1  2  3  4

Flow depth

# FIG.24

| Measurement No. (perturbation No.) | Weight pattern 1 | Weight pattern 2 | Weight pattern 3 | Weight pattern 4 | ... |
|---|---|---|---|---|---|
| Perturbation 1 | 1 | 1 | 1 | 0 | |
| Perturbation 2 | 0 | 1 | 0 | 0 | |
| Perturbation 3 | 0 | 0 | 1 | 0 | |
| Perturbation 4 | 1 | 0 | 0 | 1 | |

A

| Result of determining presence or absence of overlap | Weight pattern 1 | Weight pattern 2 | Weight pattern 3 | Weight pattern 4 | ... |
|---|---|---|---|---|---|
| | Present | Absent | Absent | Present | |

B

| Measurement No. (perturbation No.) | Weight adjusting parameter | Weight adjusting parameter | Weight adjusting parameter | Weight adjusting parameter | ... |
|---|---|---|---|---|---|
| Perturbation 1 | 1 | 1.5 | 1.8 | -- | |
| Perturbation 2 | -- | 0.5 | -- | -- | |
| Perturbation 3 | -- | -- | 0.2 | -- | |
| Perturbation 4 | 1 | -- | -- | 1 | |

C

EP 4 300 390 A1

# FIG.25

# FIG.26

Provisional predicted value of KPI #1 of synthesized measurement

Adjusting parameter of perturbation 1

Adjusting parameter of perturbation N

Target value of each KPI (known)

$$Y^{(1)} = X_0^{(1)} + \eta_1 W_1 \times \Delta X_1^{(1)} + \cdots + \eta_N W_N \times \Delta X_N^{(1)} < Z^{(1)}$$

$$\vdots \qquad \vdots \qquad\qquad\qquad\qquad\qquad\qquad\qquad \vdots \qquad \vdots$$

$$Y^{(L)} = X_0^{(L)} + \eta_1 W_1 \times \Delta X_1^{(L)} + \cdots + \eta_N W_N \times \Delta X_N^{(L)} < Z^{(L)}$$

Provisional predicted value of KPI #L of synthesized measurement

**Decide combination**

<Optimum combination>

|  | Weight |
|---|---|
| Perturbation 1 | 1 |
| Perturbation 2 | 1 |
| Perturbation 3 | 0 |
| Perturbation 4 | 0 |

EP 4 300 390 A1

# FIG.27

| Target value_KPI#1<br>_onset ratio of CKD $Z^{(1)}$ | Target value_KPI#2<br>_cost for intervention $Z^{(2)}$ | · · · | Target value_KPI#L<br>_using ratio of resource $Z^{(L)}$ |
|---|---|---|---|
| 0.30 | 6000 | | 1.00 |

# FIG.28

102 Measurement candidate generating unit

103 Measurement candidate KPI predicting unit

104 Synthesized measurement provisional KPI predicting unit

105 **Synthesized measurement actual KPI predicting unit**

When target condition is satisfied
····▶(End of process)

When target condition is not satisfied

**Provisional predicted value of synthesized measurement**

**Actual predicted value of synthesized measurement**

Predicted value of KPI #2

Existing measurement

Predicted value of KPI #1

EP 4 300 390 A1

# FIG.29

# FIG.30

EP 4 300 390 A1

# FIG.31

EP 4 300 390 A1

Europäisches
Patentamt
European
Patent Office
Office européen
des brevets

# EUROPEAN SEARCH REPORT

Application Number

EP 23 16 2886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hornbill: "Copy and Reuse Workflows", Youtube video, 26 August 2016 (2016-08-26), XP093094831, Retrieved from the Internet: URL:https://www.youtube.com/watch?v=Vpfsct MphLU [retrieved on 2023-10-25] * video description text as well as video time 0:51 - 1:30 * | 1-6 | INV. G06Q10/0631 |
| A | Bytodd Kitta: "Professional Windows Workflow Foundation", Wrox Press , 1 January 2007 (2007-01-01), XP055402161, ISBN: 9780470053867 Retrieved from the Internet: URL:https://nikhatshahin.files.wordpress.c om/2010/12/wwf.pdf [retrieved on 2017-08-29] * page 39 - pages 41,53-54 * | 1-6 | |

TECHNICAL FIELDS
SEARCHED (IPC)

G06Q

The present search report has been drawn up for all claims

| Place of search | Date of completion of the search | Examiner |
|---|---|---|
| Munich | 27 October 2023 | Krafft, Gerald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022014106 A
- JP 2005332270 A
- JP 2017208035 A
- JP 2021072022 A
- JP 6799313 B

**Non-patent literature cited in the description**

- **KONSTANTINOS MOUTSELOS ; DIMOSTHENIS KYRIAZIS ; ILIAS MAGLOGIANNIS.** A web based modular environment for assisting health policy making utilizing big data analytics. IEEE, 15 June 2022